# EUROPEAN PATENT APPLICATION

(11) **EP 4 332 135 A1**
(43) Date of publication of application: **06.03.2024**
(21) Application number: 22794409.7
(22) Date of filing: 21.03.2022
(51) Int. Cl.: C08F 220/68, C08F 4/70

(54) **METHOD FOR PREPARING POLYMER, AND OBTAINED POLYMER**

(30) Priority: 28.04.2021 CN 202110488781; 28.04.2021 CN 202110464082; 29.04.2021 CN 202110471084
(71) Applicant: CHINA PETROLEUM & CHEMICAL CORPORATION, Chaoyang District Beijing 100728 (CN); BEIJING RESEARCH INSTITUTE OF CHEMICAL INDUSTRY, CHINA PETROLEUM & CHEMICAL CORPORATION, Chaoyang District Beijing 100013 (CN)
(72) Inventor: GAO, Rong, Beijing 100013 (CN); GOU, Qingqiang, Beijing 100013 (CN); LI, Juan, Beijing 100013 (CN); ZHANG, Xiaofan, Beijing 100013 (CN); LAI, Jingjing, Beijing 100013 (CN); ZHANG, Longgui, Beijing 100013 (CN); ZHOU, Junling, Beijing 100013 (CN); LIN, Jie, Beijing 100013 (CN); LI, Xinyang, Beijing 100013 (CN); SONG, Jianhui, Beijing 100013 (CN); ZHANG, Junhui, Beijing 100013 (CN); AN, Jingyan, Beijing 100013 (CN); ZHAO, Hui, Beijing 100013 (CN); LI, Yan, Beijing 100013 (CN); MA, Dong, Beijing 100013 (CN); GU, Yuanning, Beijing 100013 (CN)
(74) Representative: Hoffmann Eitle
(86) International application number: PCT/CN2022/082002
(87) International publication number: WO 2022/227933

(57) **Abstract**

Disclosed in the present invention are a method for preparing polymer, and an obtained polymer. The method comprises: enabling olefin and unsaturated carboxylate be subjected to a polymerization reaction in the presence of a catalyst to generate an olefin-unsaturated carboxylate polymer, the catalyst comprising a primary catalyst and optionally a cocatalyst, and the primary catalyst comprising at least one complex represented by formula I, formula I', or formula I". By selecting a reacted unsaturated carboxylate monomer, catalysts, and a suitable polymerization process, a spherical and/or sphere-like polymer having good shape is directly prepared without subsequent processing steps such as granulation, and the obtained polymer product is not prone to fouling in a reactor and is convenient for transportation.

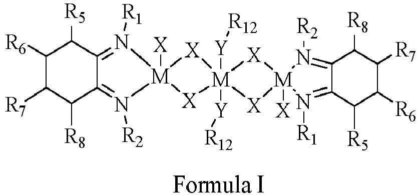

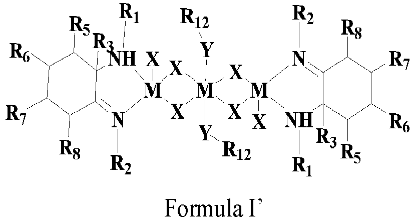

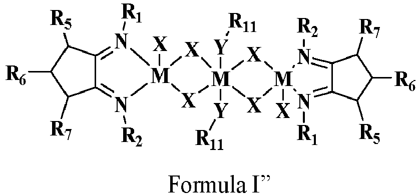

## Description

### Technical Field

The invention relates to the technical field of polymer materials, and more particularly, to a method for preparing a polymer and the resultant polymer.

### Background Art

Polyolefin products are inexpensive and excellent in performance and have a wide range of applications. In circumstances of retaining the original excellent physical and chemical properties of polyolefins, the introduction of polar groups into the molecular chains of polyolefins through chemical synthesis can improve their chemical inertness, dyeability, wettability and compatibility with other materials, and give them novel characteristics that raw materials do not have. At present, most of the industrial processes use high-pressure radical polymerization to promote the direct copolymerization of olefins and polar monomers, such as for ethylene-vinyl acetate copolymers. Such methods require large one-time investments, high operating costs and harsh reaction conditions. Therefore, the development of a coordinative, polar copolymerization process under low pressure conditions has become a research hotspot.

Coordination catalytic copolymerization, as a polymer preparation technology at normal temperature under normal pressure, has attracted widespread attention because of its significant role in reducing energy consumption and improving reaction efficiency. The participation of catalyst in the reaction process greatly reduces the activation energy of the copolymerization reaction of olefin monomers and polar monomers, which is conducive to obtaining functional polymers with higher molecular weight at lower temperatures and pressures. At present, it has been reported in literatures that a transition metal complex is used to catalyze the copolymerization of an olefin and an unsaturated carboxylic ester. However, in the prior art, no matter what method is used to carry out the polymerization, the resulting polymer is a viscous bulk solid, which is easy to fouling in the polymerization equipment and which brings difficulties to the transportation, solvent removal, and granulation of the polymer.

At present, catalytic systems that can realize the living polymerization of olefins are mostly concentrated in the early transition metal catalysts. By optimizing polymerization reaction conditions, these catalysts can give rise to polyethylene with high molecular weight and narrow distribution. For example, the FI titanium-based catalytic system reported by Fujita research group (Angew. Chem. Int. Ed. 2001, 40, 2918) and the β-ketoimine-titanium catalyst reported by Mecking research group can catalyze the living polymerization of ethylene to obtain linear polyethylene with narrow molecular weight distribution. Late transition metal catalysts can also achieve living polymerization by optimizing the catalyst structure and polymerization conditions. For example, α-iminoamide-nickel catalyst reported by Bazan (Macromolecules, 2003, 36, 9731), α-keto-β-diimide-nickel catalyst (Chem. Commun. 2009, 6177), and 2-aminomethyl pyridine-nickel catalyst developed by Wu Qing research group of Sun Yat-sen University (Chem. Commun. 2010, 46, 4321) can achieve the living polymerization of ethylene.

Hence, there is still a need for a novel method of copolymerizing an olefin monomer with a polar monomer such as an unsaturated carboxylic ester.

### Summary of the Invention

In order to solve the problems suffered by the prior art, the inventors have conducted diligent research and, as a result, found that a class of polymetallic center diimine complexes or polymetallic center aminoimine complexes can effectively catalyze the copolymerization of olefins and unsaturated carboxylic esters. Accordingly, the present invention provides a method for preparing a polymer and so-obtained polymer. The method provided by the present invention can directly give rise to spherical and/or sphere-like polymers without subsequent processing such as granulation, and the polymers have good morphology and good industrial application prospects.

One of the objects of the present invention is to provide a method for preparing a polymer, comprising polymerizing an olefin and an unsaturated carboxylic ester in the presence of a catalyst, to form an olefin-unsaturated carboxylic ester polymer,
wherein the catalyst comprises a main catalyst and optionally a cocatalyst,
the main catalyst being at least one selected from the group consisting of:
the diimine-metal complexes represented by formula I: 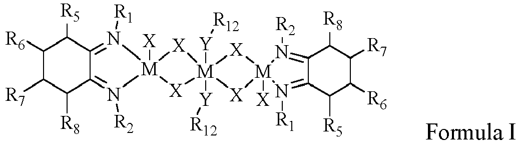 wherein, R₁ and R₂ are each independently a C1-C30 hydrocarbyl with or without a substituent; R₅-R₈ are each independently selected from the group consisting of hydrogen, halogen, hydroxy, and C1-C20 hydrocarbyl with or without a substituent, and two or more of R₅-R₈ groups are optionally joined to form a ring; each R₁₂ is independently a C1-C20 hydrocarbyl with or without a substituent; each Y is independently a Group VIA nonmetal atom; each M is independently a Group VIII metal; and each X is independently selected from the group consisting of halogen, C1-C10 hydrocarbyl with or without a substituent and C1-C10 hydrocarbyloxy with or without a substituent,
the aminoimine-metal complexes represented by formula I': 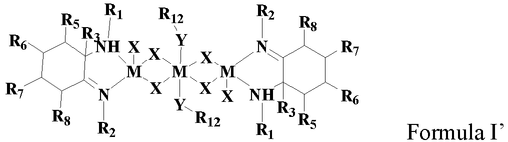 wherein, R₁ and R₂ are each independently a C1-C30 hydrocarbyl with or without a substituent; each R₃ is independently selected from the group consisting of hydrogen and C1-C20 hydrocarbyl with or without a substituent; R₅-R₈ are each independently selected from the group consisting of hydrogen, halogen, hydroxy, and C1-C20 hydrocarbyl with or without a substituent, and two or more of Rs-Rs groups are optionally joined to form a ring; each R₁₂ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent, and
the diimine-metal complexes represented by formula I": 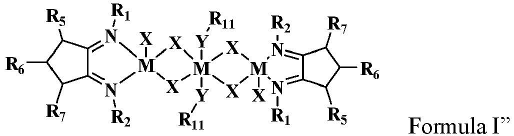 wherein, R₁ and R₂ are each independently a C1-C30 hydrocarbyl with or without a substituent; R₅-R₇ are each independently selected from the group consisting of hydrogen, halogen, hydroxy, and C1-C20 hydrocarbyl with or without a substituent, and two or more of R₅-R₇ groups are optionally joined to form a ring; each R₁₁ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

In some preferred embodiments, R₁ and R₂ are independently selected from the group consisting of C1-C20 alkyl with or without a substituent and C6-C20 aryl with or without a substituent, and R₁ and/or R₂ are/is preferably a group represented by formula A: 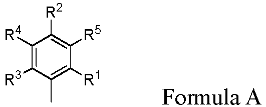 wherein, R¹-R⁵ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent, and two or more of R¹-R⁵ groups are optionally joined to form a ring;
preferably, wherein R¹-R⁵ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent.

In some preferred embodiments, each M is selected from the group consisting of nickel and palladium.

In some preferred embodiments, each Y is selected from the group consisting of O and S.

In some preferred embodiments, each X is selected from the group consisting of halogen, C1-C10 alkyl with or without a substituent and C1-C10 alkoxy with or without a substituent, and preferably from the group consisting of halogen, C1-C6 alkyl with or without a substituent and C1-C6 alkoxy with or without a substituent.

In some preferred embodiments, each R₁₂ is a C1-C20 alkyl with or without a substituent, preferably a C1-C10 alkyl with or without a substituent, and more preferably a C1-C6 alkyl with or without a substituent.

In some preferred embodiments, each R₃ is selected from the group consisting of C1-C20 alkyl with or without a substituent, C6-C20 aryl with or without a substituent, C7-C20 aralkyl with or without a substituent and C7-C20 alkaryl with or without a substituent; preferably, each R₃ is selected from the group consisting of C1-C10 alkyl with or without a substituent, C6-C10 aryl with or without a substituent, C7-C15 aralkyl with or without a substituent and C7-C15 alkaryl with or without a substituent; and more preferably, each R₃ is a C1-C6 alkyl with or without a substituent, such as methyl, ethyl, propyl or butyl.

In some preferred embodiments, the diimine-metal complexes are represented by Formula III: 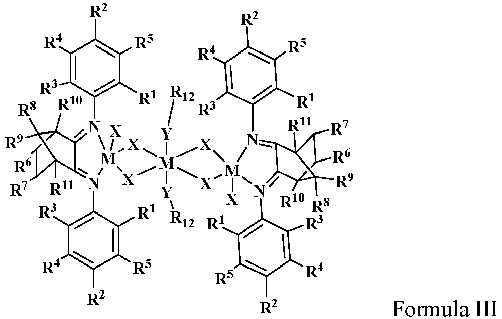 wherein, R¹-R¹¹ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent, and M, X, Y and R₁₂ are as defined above for Formula I.

In some preferred embodiments, the main catalyst comprises at least one aminoimine-metal complex represented by formula III': 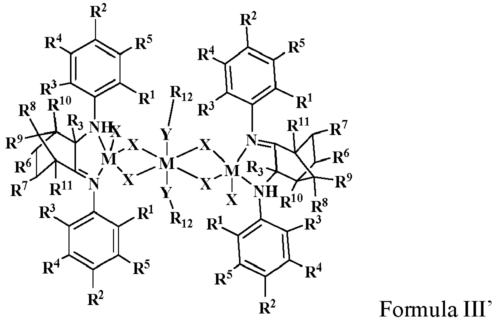 wherein, R¹-R¹¹ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent; and R₃, R₁₂, Y, M and X are as defined above for Formula I'.

In some preferred embodiments, the main catalyst comprises at least one diimine-metal complex represented by formula III": 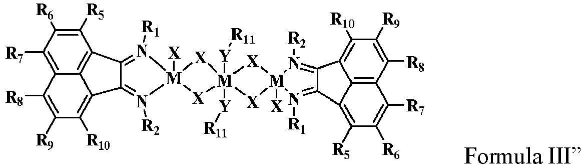 wherein, R₅-R₁₀ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent; and R₁, R₂, M, X, Y and R₁₁ are as defined above for Formula I".

In some preferred embodiments, in the formula III or III', R¹-R¹¹ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent. Preferably, R¹-R¹¹ are each independently selected from the group consisting of hydrogen, C1-C10 alkyl, halogenated C1-C10 alkyl, C1-C10 alkoxy, halogenated C1-C10 alkoxy and halogen, and more preferably from the group consisting of hydrogen, C1-C6 alkyl, halogenated C1-C6 alkyl, C1-C6 alkoxy, halogenated C1-C6 alkoxy and halogen.

In some preferred embodiments, in the formula III", R₅-R₁₀ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent. Preferably, R₅-R₁₀ are each independently selected from the group consisting of hydrogen, C1-C10 alkyl, halogenated C1-C10 alkyl, C1-C10 alkoxy, halogenated C1-C10 alkoxy, and halogen; and more preferably from the group consisting of hydrogen, C1-C6 alkyl, halogenated C1-C6 alkyl, C1-C6 alkoxy, halogenated C1-C6 alkoxy, and halogen.

In some preferred embodiments, the main catalyst comprises at least one diimine-metal complex represented by formula III‴: 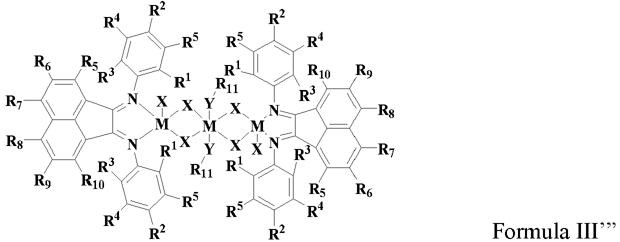 wherein, R¹-R⁵ are independently selected from the group consisting of hydrogen, halogen, C1-C6 alkyl with or without a substituent and C1-C6 alkoxy with or without a substituent; R₅-R₁₀ are independently selected from the group consisting of hydrogen, halogen, C1-C6 alkyl and C1-C6 alkoxy; each M is nickel; each Y is O; each X is independently a halogen; and each R₁₁ is independently a C1-C6 alkyl with or without a substituent.

In some preferred embodiments, the substituent is selected from the group consisting of halogen, hydroxy, C1-C10 alkyl, halogenated C1-C10 alkyl, C1-C10 alkoxy and halogenated C1-C10 alkoxy, and preferably from the group consisting of halogen, hydroxy, C1-C6 alkyl, halogenated C1-C6 alkyl, C1-C6 alkoxy and halogenated C1-C6 alkoxy.

Preferably, the C1-C6 alkyl is selected from the group consisting of methyl, ethyl, n-propyl, isopropyl, n-butyl, isobutyl, n-pentyl, isopentyl, n-hexyl, isohexyl and 3,3-dimethylbutyl.

Preferably, the C1-C6 alkoxy is selected from the group consisting of methoxy, ethoxy, n-propoxy, isopropoxy, n-butoxy, isobutoxy, n-pentoxy, isopentoxy, n-hexoxy, isohexoxy and 3,3-dimethylbutoxy.

Preferably, the halogen is selected from the group consisting of fluorine, chlorine, bromine and iodine.

In some preferred embodiments, the main catalyst used in the method of the present invention comprises at least one complex selected from the group consisting of:
1) the diimine-metal complex represented by the formula III, wherein R¹=R³=methyl, R²=R⁴-R⁷=R¹⁰=H, R⁸=R⁹=R¹¹=methyl, R₁₂=ethyl, M=Ni, Y=O, X=Br;
2) the diimine-metal complex represented by the formula III, wherein R¹=R³=ethyl, R²=R⁴-R⁷=R¹⁰=H, R⁸=R⁹=R¹¹=methyl, R₁₂=ethyl, M=Ni, Y=O, X=Br;
3) the diimine-metal complex represented by the formula III, wherein R¹=R³=isopropyl, R²=R⁴-R⁷=R¹⁰=H, R⁸=R⁹=R¹¹=methyl, R₁₂=ethyl, M=Ni, Y=O, X=Br;
4) the diimine-metal complex represented by the formula III, wherein R¹-R³=methyl, R⁴-R⁷=R¹⁰=H, R⁸=R⁹=R¹¹=methyl, R₁₂=ethyl, M=Ni, Y=O, X=Br;
5) the diimine-metal complex represented by the formula III, wherein R¹=R³=methyl, R²=Br, R⁴-R⁷=R¹⁰=H, R⁸=R⁹=R¹¹=methyl, R₁₂=ethyl, M=Ni, Y=O, X=Br;
6) the diimine-metal complex represented by the formula III, wherein R¹=R³=F, R²=R⁴-R⁷=R¹⁰=H, R⁸=R⁹=R¹¹=methyl, R₁₂=ethyl, M=Ni, Y=O, X=Br;
7) the diimine-metal complex represented by the formula III, wherein R¹=R³=Cl, R²=R⁴-R⁷=R¹⁰=H, R⁸=R⁹=R¹¹=methyl, R₁₂=ethyl, M=Ni, Y=O, X=Br;
8) the diimine-metal complex represented by the formula III, wherein R¹=R³=Br, R²=R⁴-R⁷=R¹⁰=H, R⁸=R⁹=R¹¹=methyl, R₁₂=ethyl, M=Ni, Y=O, X=Br;
9) the diimine-metal complex represented by the formula III, wherein R¹=R³=methyl, R²=R⁴-R⁷=R¹⁰=H, R⁸=R⁹=R¹¹=methyl, R₁₂=isobutyl, M=Ni, Y=O, X=Br;
10) the diimine-metal complex represented by the formula III, wherein R¹=R³=ethyl, R²=R⁴-R⁷=R¹⁰=H, R⁸=R⁹=R¹¹=methyl, R₁₂=isobutyl, M=Ni, Y=O, X=Br;
11) the diimine-metal complex represented by the formula III, wherein R¹=R³=isopropyl, R²=R⁴-R⁷=R¹⁰=H, R⁸=R⁹=R¹¹=methyl, R₁₂=isobutyl, M=Ni, Y=O, X=Br;
12) the diimine-metal complex represented by the formula III, wherein R¹-R³=methyl, R⁴-R⁷=R¹⁰=H, R⁸=R⁹=R¹¹=methyl, R₁₂=isobutyl, M=Ni, Y=O, X=Br;
13) the diimine-metal complex represented by the formula III, wherein R¹=R³=methyl, R²=Br, R⁴-R⁷=R¹⁰=H, R⁸=R⁹=R¹¹=methyl, R₁₂=isobutyl, M=Ni, Y=O, X=Br;
14) the diimine-metal complex represented by the formula III, wherein R¹=R³=F, R²=R⁴-R⁷=R¹⁰=H, R⁸=R⁹=R¹¹=methyl, R₁₂=isobutyl, M=Ni, Y=O, X=Br;
15) the diimine-metal complex represented by the formula III, wherein R¹=R³=Cl, R²=R⁴-R⁷=R¹⁰=H, R⁸=R⁹=R¹¹=methyl, R₁₂=isobutyl, M=Ni, Y=O, X=Br;
16) the diimine-metal complex represented by the formula III, wherein R¹=R³=Br, R²=R⁴-R⁷=R¹⁰=H, R⁸=R⁹=R¹¹=methyl, R₁₂=isobutyl, M=Ni, Y=O, X=Br;
17) the diimine-metal complex represented by the formula III, wherein R¹=R³=methyl, R²=R⁴-R⁷=R¹⁰=H, R⁸=R⁹=methyl, R¹¹=bromomethyl, R₁₂=ethyl, M=Ni, Y=O, X=Br;
18) the diimine-metal complex represented by the formula III, wherein R¹=R³=ethyl, R²=R⁴-R⁷=R¹⁰=H, R⁸=R⁹=methyl, R¹¹=bromomethyl, R₁₂=ethyl, M=Ni, Y=O, X=Br;
19) the diimine-metal complex represented by the formula III, wherein R¹=R³=isopropyl, R²=R⁴-R⁷=R¹⁰=H, R⁸=R⁹=methyl, R¹¹=bromomethyl, R₁₂=ethyl, M=Ni, Y=O, X=Br;
20) the diimine-metal complex represented by the formula III, wherein R¹-R³=methyl, R⁴-R⁷=R¹⁰=H, R⁸=R⁹=methyl, R¹¹=bromomethyl, R₁₂=ethyl, M=Ni, Y=O, X=Br;
21) the diimine-metal complex represented by the formula III, wherein R¹=R³=methyl, R²=Br, R⁴-R⁷=R¹⁰=H, R⁸=R⁹=methyl, R¹¹=bromomethyl, R₁₂=ethyl, M=Ni, Y=O, X=Br;
22) the diimine-metal complex represented by the formula III, wherein R¹=R³=F, R²=R⁴-R⁷=R¹⁰=H, R⁸=R⁹=methyl, R¹¹=bromomethyl, R₁₂=ethyl, M=Ni, Y=O, X=Br;
23) the diimine-metal complex represented by the formula III, wherein R¹=R³=Cl, R²=R⁴-R⁷=R¹⁰=H, R⁸=R⁹=methyl, R¹¹=bromomethyl, R₁₂=ethyl, M=Ni, Y=O, X=Br;
24) the diimine-metal complex represented by the formula III, wherein R¹=R³=Br, R²=R⁴-R⁷=R¹⁰=H, R⁸=R⁹=methyl, R¹¹=bromomethyl, R₁₂=ethyl, M=Ni, Y=O, X=Br.

In some preferred embodiments, the diimine-metal complex has a structure shown by formula IV: 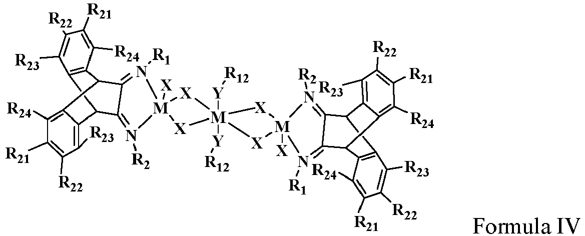 wherein, R₁ and R₂ are each independently a C1-C30 hydrocarbyl with or without a substituent; R₂₁-R₂₄ are each independently selected from the group consisting of hydrogen, halogen, hydroxy, C1-C20 hydrocarbyl with or without a substituent and C1-C20 hydrocarbyloxy with or without a substituent, and two or more of R₂₁-R₂₄ groups are optionally joined to form a ring; each R₁₂ is a C1-C20 hydrocarbyl with or without a substituent; each Y is a Group VIA non-metal atom; each M is a Group VIII metal; each X is selected from the group consisting of halogen, C1-C10 hydrocarbyl with or without a substituent and C1-C10 hydrocarbyloxy with or without a substituent.

In some preferred embodiments, in the formula IV, R₁ and R₂ are independently selected from the group consisting of C1-C20 alkyl with or without a substituent and C6-C20 aryl with or without a substituent, and R₁ and/or R₂ are/is preferably a group represented by formula A: 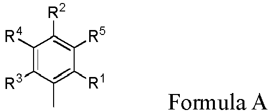 wherein, R¹-R⁵ are the same or different, and are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent, and R¹-R⁵ groups are optionally joined to form a ring;
preferably, wherein R¹-R⁵ are the same or different, and are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
each M is selected from nickel and palladium; each Y is selected from O and S; each X is selected from the group consisting of halogen, C1-C10 alkyl with or without a substituent, and C1-C10 alkoxy with or without a substituent, and preferably from the group consisting of halogen, C1-C6 alkyl with or without a substituent, and C1-C6 alkoxy with or without a substituent; and
each R₁₂ is a C1-C20 alkyl with or without a substituent, preferably a C1-C10 alkyl with or without a substituent, and more preferably a C1-C6 alkyl with or without a substituent.

In some preferred embodiments, the diimine-metal complex has a structure shown by formula V: 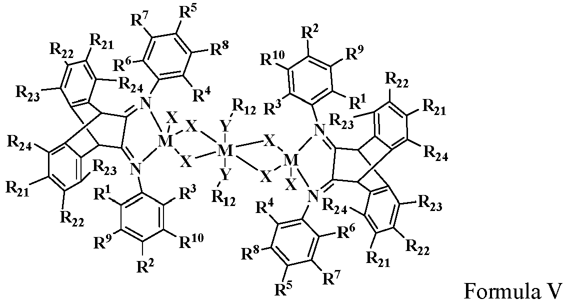 wherein, R¹-R¹⁰, R₂₁-R₂₄ are each independently selected from the group consisting of hydrogen, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, C7-C20 alkaryl with or without a substituent and halogen, R¹-R¹⁰ are optionally joined to form a ring, and R₂₁-R₂₄ are optionally joined to form a ring; and R₁₂, Y, M and X are as defined above for Formula I.

In some preferred embodiments, in the formula V, R¹-R¹⁰, R₂₁-R₂₄ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
preferably, R¹-R¹⁰, R₂₁-R₂₄ are the same or different, and are each independently selected from the group consisting of hydrogen, C1-C10 alkyl, halogenated C1-C10 alkyl, C1-C10 alkoxy, halogenated C1-C10 alkoxy, and halogen; and more preferably from the group consisting of hydrogen, C1-C6 alkyl, halogenated C1-C6 alkyl, C1-C6 alkoxy, halogenated C1-C6 alkoxy, and halogen.

In some preferred embodiments, the main catalyst used in the method of the present invention comprises at least one complex selected from the group consisting of:
1) the complex represented by the formula V, wherein R¹=R³=R⁴=R⁶=isopropyl, R²=R⁵=R⁷-R¹⁰=R₂₁=R₂₂=R₂₃=R₂₄=H, R₁₂=Et, M=Ni, Y=O, X=Br;
2) the complex represented by the formula V, wherein R¹=R³=R⁴=R⁶=Et, R²=R⁵=R⁷-R¹⁰=R₂₁=R₂₂=R₂₃=R₂₄=H, R₁₂=Et, M=Ni, Y=O, X=Br;
3) the complex represented by the formula V, wherein R¹=R³=R⁴=R⁶=Me, R²=R⁵=R⁷-R¹⁰=R₂₁=R₂₂=R₂₃=R₂₄=H, R₁₂=Et, M=Ni, Y=O, X=Br;
4) the complex represented by the formula V, wherein R¹-R⁶=Me, R⁷-R¹⁰=R₂₁ =R₂₂=R₂₃=R₂₄=H, R12=Et, M=Ni, Y=O, X=Br;
5) the complex represented by the formula V, wherein R¹=R³=R⁴=R⁶=Br, R²=R⁵=R⁷-R¹⁰=R₂₁=R₂₂=R₂₃=R₂₄=H, R₁₂=Et, M=Ni, Y=O, X=Br;
6) the complex represented by the formula V, wherein R¹=R³=R⁴=R⁶=Cl, R²=R⁵=R⁷-R¹⁰=R₂₁=R₂₂=R₂₃=R₂₄=H, R₁₂=Et, M=Ni, Y=O, X=Br;
7) the complex represented by the formula V, wherein R¹=R³=R⁴=R⁶=F, R²=R⁵=R⁷-R¹⁰=R₂₁=R₂₂=R₂₃=R₂₄=H, R₁₂=Et, M=Ni, Y=O, X=Br;
8) the complex represented by the formula V, wherein R¹=R³=R⁴=R⁶=isopropyl, R²=R⁵=R⁷-R¹⁰=R₂₁=R₂₂=R₂₃=R₂₄=H, R₁₂=isobutyl, M=Ni, Y=O, X=Br;
9) the complex represented by the formula V, wherein R¹=R³=R⁴=R⁶=Et, R²=R⁵=R⁷-R¹⁰=R₂₁=R₂₂=R₂₃=R₂₄=H, R₁₂=isobutyl, M=Ni, Y=O, X=Br;
10) the complex represented by the formula V, wherein R¹=R³=R⁴=R⁶=Me, R²=R⁵=R⁷-R¹⁰=R₂₁=R₂₂=R₂₃=R₂₄=H, R₁₂=isobutyl, M=Ni, Y=O, X=Br;
11) the complex represented by the formula V, wherein R¹-R⁶=Me, R⁷-R¹⁰=R₂₁= R₂₂=R₂₃=R₂₄=H, R₁₂=isobutyl, M=Ni, Y=O, X=Br;
12) the complex represented by the formula V, wherein R¹=R³=R⁴=R⁶=Br, R²=R⁵=R⁷-R¹⁰=R₂₁=R₂₂=R₂₃=R₂₄=H, R₁₂=isobutyl, M=Ni, Y=O, X=Br;
13) the complex represented by the formula V, wherein R¹=R³=R⁴=R⁶=Cl, R²=R⁵=R⁷-R¹⁰=R₂₁=R₂₂=R₂₃=R₂₄=H, R₁₂=isobutyl, M=Ni, Y=O, X=Br;
14) the complex represented by the formula V, wherein R¹=R³=R⁴=R⁶=F, R²=R⁵=R⁷-R¹⁰=R₂₁=R₂₂=R₂₃=R₂₄=H, R₁₂=isobutyl, M=Ni, Y=O, X=Br;
15) the complex represented by the formula V, wherein R¹=R³=R⁴=R⁶=isopropyl, R²=R⁵=R⁷-R¹⁰=R₂₂=H, R₂₁=tert-butyl, R₂₃=R₂₄=H, R₁₂=Et, M=Ni, Y=O, X=Br;
16) the complex represented by the formula V, wherein R¹=R³=R⁴=R⁶=Et, R²=R⁵=R⁷- R¹⁰=R₂₂=H, R₂₁=tert-butyl, R₂₃=R₂₄=H, R₁₂=Et, M=Ni, Y=O, X=Br;
17) the complex represented by the formula V, wherein R¹=R³=R⁴=R⁶=Me, R²=R⁵=R⁷- R¹⁰=R₂₂=H, R₂₁=tert-butyl, R₂₃=R₂₄=H, R₁₂=Et, M=Ni, Y=O, X=Br;
18) the complex represented by the formula V, wherein R¹-R⁶=Me, R⁷-R¹⁰=R₂₂=H, R₂₁=tert-butyl, R₂₃=R₂₄=H, R₁₂=Et, M=Ni, Y=O, X=Br;
19) the complex represented by the formula V, wherein R¹=R³=R⁴=R⁶=Br, R²=R⁵=R⁷- R¹⁰=R₂₂=H, R₂₁=tert-butyl, R₂₃=R₂₄=H, R₁₂=Et, M=Ni, Y=O, X=Br;
20) the complex represented by the formula V, wherein R¹=R³=R⁴=R⁶=Cl, R²=R⁵=R⁷- R¹⁰=R₂₂=H, R₂₁=tert-butyl, R₂₃=R₂₄=H, R₁₂=Et, M=Ni, Y=O, X=Br;
21) the complex represented by the formula V, wherein R¹=R³=R⁴=R⁶=F, R²=R⁵=R⁷- R¹⁰=R₂₂=H, R₂₁=tert-butyl, R₂₃=R₂₄=H, R₁₂=Et, M=Ni, Y=O, X=Br;
22) the complex represented by the formula V, wherein R¹=R³=R⁴=R⁶=isopropyl, R²=R⁵=R⁷-R¹⁰=R₂₂=H, R₂₁=tert-butyl, R₂₃=R₂₄=H, R₁₂=isobutyl, M=Ni, Y=O, X=Br;
23) the complex represented by the formula V, wherein R¹=R³=R⁴=R⁶=Et, R²=R⁵=R⁷- R¹⁰=R₂₂=H, R₂₁=tert-butyl, R₂₃=R₂₄=H, R₁₂=isobutyl, M=Ni, Y=O, X=Br;
24) the complex represented by the formula V, wherein R¹=R³=R⁴=R⁶=Me, R²=R⁵=R⁷- R¹⁰=R₂₂=H, R₂₁=tert-butyl, R₂₃=R₂₄=H, R₁₂=isobutyl, M=Ni, Y=O, X=Br;
25) the complex represented by the formula V, wherein R¹-R⁶=Me, R⁷-R¹⁰=R₂₂=H, R₂₁=tert-butyl, R₂₃=R₂₄=H, R12=isobutyl, M=Ni, Y=O, X=Br;
26) the complex represented by the formula V, wherein R¹=R³=R⁴=R⁶=Br, R²=R⁵=R⁷- R¹⁰=R₂₂=H, R₂₁=tert-butyl, R₂₃=R₂₄=H, R₁₂=isobutyl, M=Ni, Y=O, X=Br;
27) the complex represented by the formula V, wherein R¹=R³=R⁴=R⁶=Cl, R²=R⁵=R⁷- R¹⁰=R₂₂=H, R₂₁=tert-butyl, R₂₃=R₂₄=H, R₁₂=isobutyl, M=Ni, Y=O, X=Br;
28) the complex represented by the formula V, wherein R¹=R³=R⁴=R⁶=F, R²=R⁵=R⁷- R¹⁰=R₂₂=H, R₂₁=tert-butyl, R₂₃=R₂₄=H, R₁₂=isobutyl, M=Ni, Y=O, X=Br; 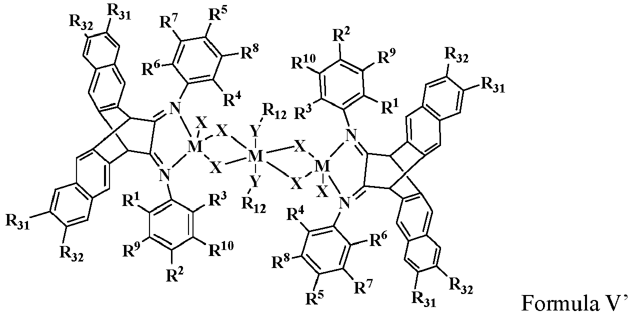
29) the complex represented by the formula V', wherein R¹=R³=R⁴=R⁶=isopropyl, R²=R⁵=R⁷-R¹⁰=R₃₁=R₃₂=H, R₁₂=Et, M=Ni, Y=O, X=Br;
30) the complex represented by the formula V', wherein R¹=R³=R⁴=R⁶=Et, R²=R⁵=R⁷- R¹⁰=R₃₁=R₃₂=H, R₁₂=Et, M=Ni, Y=O, X=Br;
31) the complex represented by the formula V', wherein R¹=R³=R⁴=R⁶=Me, R²=R⁵=R⁷- R¹⁰=R₃₁=R₃₂=H, R₁₂=Et, M=Ni, Y=O, X=Br;
32) the complex represented by the formula V', wherein R¹-R⁶=Me, R⁷-R¹⁰=R₃₁=R₃₂=H, R₁₂=Et, M=Ni, Y=O, X=Br;
33) the complex represented by the formula V', wherein R¹=R³=R⁴=R⁶=Br, R²=R⁵=R⁷- R¹⁰=R₃₁=R₃₂=H, R₁₂=Et, M=Ni, Y=O, X=Br;
34) the complex represented by the formula V', wherein R¹=R³=R⁴=R⁶=Cl, R²=R⁵=R⁷- R¹⁰=R₃₁=R₃₂=H, R₁₂=Et, M=Ni, Y=O, X=Br;
35) the complex represented by the formula V', wherein R¹=R³=R⁴=R⁶=F, R²=R⁵=R⁷- R¹⁰=R₃₁=R₃₂=H, R₁₂=Et, M=Ni, Y=O, X=Br;
36) the complex represented by the formula V', wherein R¹=R³=R⁴=R⁶=isopropyl, R²=R⁵=R⁷-R¹⁰=R₃₁=R₃₂=H, R₁₂=isobutyl, M=Ni, Y=O, X=Br;
37) the complex represented by the formula V', wherein R¹=R³=R⁴=R⁶=Et, R²=R⁵=R⁷- R¹⁰=R₃₁=R₃₂=H, R₁₂=isobutyl, M=Ni, Y=O, X=Br;
38) the complex represented by the formula V', wherein R¹=R³=R⁴=R⁶=Me, R²=R⁵=R⁷- R¹⁰=R₃₁=R₃₂=H, R₁₂=isobutyl, M=Ni, Y=O, X=Br;
39) the complex represented by the formula V', wherein R¹-R⁶=Me, R⁷-R¹⁰=R₃₁=R₃₂=H, R₁₂=isobutyl, M=Ni, Y=O, X=Br;
40) the complex represented by the formula V', wherein R¹=R³=R⁴=R⁶=Br, R²=R⁵=R⁷- R¹⁰=R₃₁=R₃₂=H, R₁₂=isobutyl, M=Ni, Y=O, X=Br;
41) the complex represented by the formula V', wherein R¹=R³=R⁴=R⁶=Cl, R²=R⁵=R⁷- R¹⁰=R₃₁=R₃₂=H, R₁₂=isobutyl, M=Ni, Y=O, X=Br;
42) the complex represented by the formula V', wherein R¹=R³=R⁴=R⁶=F, R²=R⁵=R⁷- R¹⁰=R₃₁=R₃₂=H, R₁₂=isobutyl, M=Ni, Y=O, X=Br;
43) the complex represented by the formula V', wherein R¹=R³=R⁴=R⁶=isopropyl, R²=R⁵=R⁷- R¹⁰=H, R₃₁=R₃₂=R₁₂=Et, M=Ni, Y=O, X=Br;
44) the complex represented by the formula V', wherein R¹=R³=R⁴=R⁶=Et, R²=R⁵=R⁷-R¹⁰=H, R₃₁=R₃₂=R₁₂=Et, M=Ni, Y=O, X=Br;
45) the complex represented by the formula V', wherein R¹=R³=R⁴=R⁶=Me, R²=R⁵=R⁷- R¹⁰=H, R₃₁=R₃₂=R₁₂=Et, M=Ni, Y=O, X=Br;
46) the complex represented by the formula V', wherein R¹-R⁶=Me, R⁷-R¹⁰=H, R₃₁=R₃₂=R₁₂=Et, M=Ni, Y=O, X=Br;
47) the complex represented by the formula V', wherein R¹=R³=R⁴=R⁶=Br, R²=R⁵=R⁷-R¹⁰=H, R₃₁=R₃₂=R₁₂=Et, M=Ni, Y=O, X=Br;
48) the complex represented by the formula V', wherein R¹=R³=R⁴=R⁶=Cl, R²=R⁵=R⁷-R¹⁰=H, R₃₁=R₃₂=R₁₂=Et, M=Ni, Y=O, X=Br;
49) the complex represented by the formula V', wherein R¹=R³=R⁴=R⁶=F, R²=R⁵=R⁷-R¹⁰=H, R₃₁=R₃₂=R₁₂=Et, M=Ni, Y=O, X=Br;
50) the complex represented by the formula V', wherein R¹=R³=R⁴=R⁶=isopropyl, R²=R⁵=R⁷- R¹⁰=H, R₃₁=R₃₂=R₁₂=Et, M=Ni, Y=O, X=Br;
51) the complex represented by the formula V', wherein R¹=R³=R⁴=R⁶=Et, R²=R⁵=R⁷-R¹⁰=H, R₃₁=R₃₂=Et, R₁₂=isobutyl, M=Ni, Y=O, X=Br;
52) the complex represented by the formula V', wherein R¹=R³=R⁴=R⁶=Me, R²=R⁵=R⁷- R¹⁰=H, R₃₁=R₃₂=Et, R₁₂=isobutyl, M=Ni, Y=O, X=Br;
53) the complex represented by the formula V', wherein R¹-R⁶=Me, R⁷-R¹⁰=H, R₃₁=R₃₂=Et, R₁₂=isobutyl, M=Ni, Y=O, X=Br;
54) the complex represented by the formula V', wherein R¹=R³=R⁴=R⁶=Br, R²=R⁵=R⁷-R¹⁰=H, R₃₁=R₃₂=Et, R₁₂=isobutyl, M=Ni, Y=O, X=Br;
55) the complex represented by the formula V', wherein R¹=R³=R⁴=R⁶=Cl, R²=R⁵=R⁷-R¹⁰=H, R₃₁=R₃₂=Et, R₁₂=isobutyl, M=Ni, Y=O, X=Br; and
56) the complex represented by the formula V', wherein R¹=R³=R⁴=R⁶=F, R²=R⁵=R⁷-R¹⁰=H, R₃₁=R₃₂=Et, R₁₂=isobutyl, M=Ni, Y=O, X=Br.

In some preferred embodiments, the main catalyst used in the method of the present invention comprises at least one complex selected from the group consisting of:
the complex represented by the formula III', wherein R¹=R³=iPr, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=i-Pr, M=Ni, Y=O, X=Br;
the complex represented by the formula III', wherein R¹-R³=Me, R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹-R³=Me, R⁴-R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=methyl, R²=Br, R⁴-R⁷=R¹⁰=H, R⁸=R⁹=R¹¹=R₃=CH₃, R₁₂=Et, M=Ni, Y=O, X=Br;
the complex represented by the formula III', wherein R¹=R³=methyl, R²=Br, R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=F, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Cl, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Br, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=methyl, R²=R⁴-R⁷=R¹⁰=H, R⁸=R⁹=R¹¹=CH₃, R₃=Et, R₁₂=isobutyl, M=Ni, Y=O, X=Br;
the complex represented by the formula III', wherein R¹=R³=ethyl, R²=R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹=R³=isopropyl, R²=R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹-R³=methyl, R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹=R³=methyl, R²=Br, R⁴-R⁷=R¹⁰=H, R⁸=R⁹=R¹¹=methyl, R₃=isopropyl, R₁₂=isobutyl, M=Ni, Y=O, X=Br;
the complex represented by the formula III', wherein R¹=R³=F, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=Cl, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=Br, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=methyl, R²=R⁴-R⁷=R¹⁰=H, R⁸=R⁹=CH₃, R¹¹=bromomethyl, R₃=isopropyl, R₁₂=ethyl, M=Ni, Y=O, X=Br;
the complex represented by the formula III', wherein R¹=R³=Et, R²=R⁴-R⁷=R¹⁰=H, R⁸=R⁹=CH₃, R¹¹=CH₂Br, R₃=isopropyl, R₁₂=ethyl, M=Ni, Y=O, X=Br;
the complex represented by the formula III', wherein R¹=R³=isopropyl, R²=R⁴-R⁷=R¹⁰=H, R⁸=R⁹=CH₃, R¹¹=CH₂Br, R₃=ethyl, R₁₂=Et, M=Ni, Y=O, X=Br;
the complex represented by the formula III', wherein R¹-R³=Me, R⁴-R⁷=R¹⁰=H, R⁸=R⁹=CH₃, R¹¹=CH₂Br, R₁₂=ethyl, M=Ni, Y=O, X=Br;
the complex represented by the formula III', wherein R¹=R³=Me, R²=Br, R⁴-R⁷=R¹⁰=H, R⁸=R⁹=Me, R₃=Et, R¹¹=CH₂Br, R₁₂=Et, M=Ni, Y=O, X=Br;
the complex represented by the formula III', wherein R¹=R³=F, R²=R⁴-R⁷=R¹⁰=H, R⁸=R⁹=Me, R¹¹=CH₂Br, R₃=isobutyl, R₁₂=Et, M=Ni, Y=O, X=Br;
the complex represented by the formula III', wherein R¹=R³=Cl, R²=R⁴-R⁷=R¹⁰=H, R⁸=R⁹=Me, R¹¹=CH₂Br, R₃=isobutyl, R₁₂=Et, M=Ni, Y=O, X=Br; and
the complex represented by the formula III', wherein R¹=R³=Br, R²=R⁴-R⁷=R¹⁰=H, R⁸=R⁹=Me, R¹¹=CH₂Br, R₃=isobutyl, R₁₂=Et, M=Ni, Y=O, X=Br.

In some preferred embodiments, the main catalyst used in the method of the present invention comprises at least one complex selected from the group consisting of:
the complex represented by the formula III"', wherein R¹=R³=isopropyl, R²=R⁴=R⁵=R₅- R₁₀=H, R₁₁=Me, M=Ni, Y=O, X=Br;
the complex represented by the formula III"', wherein R¹=R³=Et, R²=R⁴=R⁵=R₅-R₁₀=H, R₁₁=Me, M=Ni, Y=O, X=Br;
the complex represented by the formula III"', wherein R¹=R³=Me, R²=R⁴=R⁵=R₅-R₁₀=H, R₁₁=Me, M=Ni, Y=O, X=Br;
the complex represented by the formula III"', wherein R¹-R³=Me, R⁴=R⁵=R₅-R₁₀=H, R₁₁=Me, M=Ni, Y=O, X=Br;
the complex represented by the formula III‴, wherein R¹=R³=Me, R²=Br, R⁴=R⁵=R₅-R₁₀=H, R₁₁=Me, M=Ni, Y=O, X=Br;
the complex represented by the formula III‴, wherein R¹=R³=Br, R²=R⁴=R⁵=R₅-R₁₀=H, R₁₁=Me, M=Ni, Y=O, X=Br;
the complex represented by the formula III‴, wherein R¹=R³=Cl, R²=R⁴=R⁵=R₅-R₁₀=H, R₁₁=Me, M=Ni, Y=O, X=Br;
the complex represented by the formula III‴, wherein R¹=R³=F, R²=R⁴=R⁵=R₅-R₁₀=H, R₁₁=Me, M=Ni, Y=O, X=Br;
the complex represented by the formula III‴, wherein R¹=R³=isopropyl, R²=R⁴=R⁵=R₅- R₁₀=H, Rn=Et, M=Ni, Y=O, X=Br;
the complex represented by the formula III"', wherein R¹=R³=Et, R²=R⁴=R⁵=R₅-R₁₀=H, R₁₁=Et, M=Ni, Y=O, X=Br;
the complex represented by the formula III"', wherein R¹=R³=Me, R²=R⁴=R⁵=R₅-R₁₀=H, Rn=Et, M=Ni, Y=O, X=Br;
the complex represented by the formula III"', wherein R¹-R³=Me, R⁴=R⁵=R₅-R₁₀=H, Rn=Et, M=Ni, Y=O, X=Br;
the complex represented by the formula III"', wherein R¹=R³=Me, R²=Br, R⁴=R⁵=R₅-R₁₀=H, Rn=Et, M=Ni, Y=O, X=Br;
the complex represented by the formula III"', wherein R¹=R³=Br, R²=R⁴=R⁵=R₅-R₁₀=H, R₁₁=Et, M=Ni, Y=O, X=Br;
the complex represented by the formula III"', wherein R¹=R³=Cl, R²=R⁴=R⁵=R₅-R₁₀=H, Rn=Et, M=Ni, Y=O, X=Br;
the complex represented by the formula III"', wherein R¹=R³=F, R²=R⁴=R⁵=R₅-R₁₀=H, R₁₁=Et, M=Ni, Y=O, X=Br;
the complex represented by the formula III"', wherein R¹=R³=isopropyl, R²=R⁴=R⁵=R₅- R₁₀=H, R₁₁=isobutyl, M=Ni, Y=O, X=Br;
the complex represented by the formula III"', wherein R¹=R³=Et, R²=R⁴=R⁵=R₅-R₁₀=H, R₁₁=isobutyl, M=Ni, Y=O, X=Br;
the complex represented by the formula III"', wherein R¹=R³=Me, R²=R⁴=R⁵=R₅-R₁₀=H, R₁₁=isobutyl, M=Ni, Y=O, X=Br;
the complex represented by the formula III''', wherein R¹-R³=Me, R⁴=R⁵=R₅-R₁₀=H, R₁₁=isobutyl, M=Ni, Y=O, X=Br;
the complex represented by the formula III''', wherein R¹=R³=Me, R²=Br, R⁴=R⁵=R₅-R₁₀=H, R₁₁=isobutyl, M=Ni, Y=O, X=Br;
the complex represented by the formula III‴, wherein R¹=R³=Br, R²=R⁴=R⁵=R₅-R₁₀=H, R₁₁=isobutyl, M=Ni, Y=O, X=Br;
the complex represented by the formula III''', wherein R¹=R³=Cl, R²=R⁴=R⁵=R₅-R₁₀=H, R₁₁=isobutyl, M=Ni, Y=O, X=Br;
the complex represented by the formula III''', wherein R¹=R³=F, R²=R⁴=R⁵=R₅-R₁₀=H, R₁₁=isobutyl, M=Ni, Y=O, X=Br;
the complex represented by the formula III''', wherein R¹=R³=isopropyl, R²=R⁴=R⁵=R₅=R₆=R₉=R₁₀=H, R₇=R₈=Me, R₁₁=Et, M=Ni, Y=O, X=Br;
the complex represented by the formula III''', wherein R¹=R³=Et, R²=R⁴=R⁵=R₅=R₆=R₉=R₁₀=H, R₇=R₈=Me, R₁₁=Et, M=Ni, Y=O, X=Br;
the complex represented by the formula III‴, wherein R¹=R³=Me, R²=R⁴=R⁵=R₅=R₆=R₉=R₁₀=H, R₇=R₈=Me, R₁₁=Et, M=Ni, Y=O, X=Br;
the complex represented by the formula III‴, wherein R¹-R³=Me, R⁴=R⁵=R₅=R₆=R₉=R₁₀=H, R₇=R₈=Me, R₁₁=Et, M=Ni, Y=O, X=Br;
the complex represented by the formula III''', wherein R¹=R³=Me, R²=Br, R⁴=R⁵=R₅=R₆=R₉=R₁₀=H, R₇=R₈=Me, R₁₁=Et, M=Ni, Y=O, X=Br;
the complex represented by the formula III''', wherein R¹=R³=Br, R²=R⁴=R⁵=R₅=R₆=R₉=R₁₀=H, R₇=R₈=Me, R₁₁=Et, M=Ni, Y=O, X=Br;
the complex represented by the formula III''', wherein R¹=R³=Cl, R²=R⁴=R⁵=R₅=R₆=R₉=R₁₀=H, R₇=R₈=Me, R₁₁=Et, M=Ni, Y=O, X=Br; and
the complex represented by the formula III''', wherein R¹=R³=F, R²=R⁴=R⁵=R₅=R₆=R₉=R₁₀=H, R₇=R₈=Me, R₁₁=Et, M=Ni, Y=O, X=Br.

For the diamine-metal complexes that can be used in the method of the present invention, please see the inventors' two previous patent applications: Application No.: 201911048975.0, title of the invention: Diimine metal complex and preparation method and application thereof, Application No.: 201911049898.0, title of the invention: Diimine complex and preparation method and application thereof, Application No.: CN201911049899.5, title of the invention: Diimine metal complex and preparation method and application thereof, which are incorporated herein by reference in their entirety.

For the aminoimine-metal complexes that can be used in the method of the present invention, please see the inventors' previous patent application: Application No.: 201911049911.2, title of the invention: Aminoimine metal complex and preparation method and application thereof, which is incorporated herein by reference in its entirety.

In some embodiments, the olefin is at least one of olefins having 2-20 carbon atoms, such as 2-16 carbon atoms, preferably at least one of ethylene and alpha-olefins having 3-16 carbon atoms, such as 3-14 carbon atoms, and more preferably at least one of ethylene and C₂-C₁₀ alpha-olefins.

In other embodiments of the invention, the olefin is a C3-C16 cyclic olefin, and preferably a 5-membered or 6-membered cyclic olefin.

Preferably, the olefin is ethylene or an alpha-olefin having 3-16 carbon atoms, and more preferably ethylene or a C2-C10 alpha-olefin, for example, ethylene, propylene, butene, pentene, hexene, heptene and octene.

In some embodiments, the unsaturated carboxylic ester is one or more of those represented by formula G: 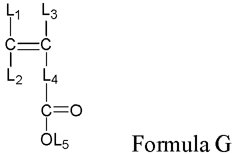 wherein, L₁-L₃ are each independently H or a C1-C30 alkyl with or without a substituent; L₄ is a C1-C30 alkylene group with a pendent group; L₅ is H or a C1-C30 alkyl with or without a substituent, or L₅ is a C1-C20 alkyl or a C1-C20 haloalkyl,
preferably, L₁ and L₂ are H; L₃ is H or a C₁-C₃₀ alkyl, more preferably H or a C1-C20 alkyl, and even more preferably H or a C1-C10 alkyl; L₄ is a C1-C20 alkylene with a pendent group, and more preferably a C1-C10 alkylene with a pendent group; and L₅ is a C1-C20 alkyl, preferably a C1-C10 alkyl, and more preferably a C1-C6 alkyl.

In some preferred embodiments of the invention,
the substituent in the L₁-L₃ is one or more selected from the group consisting of halogen, C1-C10 alkyl, C1-C10 alkoxy, C6-C10 aryl, cyano and hydroxy, and more preferably one or more selected from the group consisting of C1-C6 alkyl, halogen and C1-C6 alkoxy; and
the pendent group in the L₄ is one or more selected from the group consisting of halogen, C6-C20 aryl, C1-C20 alkyl and C1-C20 alkoxy, with the C6-C20 aryl, the C1-C20 alkyl and the C1-C20 alkoxy being optionally substituted by a substituent, which is preferably one or more selected from the group consisting of halogen, C1-C10 alkyl, C1-C10 alkoxy, C6-C10 aryl and hydroxy. More preferably, the pendent group is one or more selected from the group consisting of halogen, phenyl, C1-C6 alkyl and hydroxy-substituted C1-C6 alkyl, with the C1-C6 alkyl including methyl, ethyl, n-propyl, isopropyl, n-butyl, isobutyl, tert-butyl, pentyl and hexyl.

In the invention, the carbon number n of the Cn alkylene group refers to the number of carbon atoms in the straight chain, excluding the number of carbon atoms in a side group. For example, isopropylene (-CH₂-CH(CH₃)-) is referred to herein as C₂ alkylene with a pendant group (methyl).

According to a preferred embodiment of the invention, specific examples of the unsaturated carboxylic ester represented by the formula G include, but are not limited to, methyl 2-methyl-3-butenoate, methyl 2-methyl-4-pentenoate, ethyl 2-methyl-4-pentenoate, methyl 2,3-dimethyl-4-pentenoate, ethyl 2-methyl-3-butenoate, methyl 2,3-dimethyl butenoate, methyl 2-ethyl-3-butenoate, methyl 2,2-dimethyl-3-butenoate, methyl 2-methyl-3-methylenepentenoate, ethyl 2,3-dimethyl-3-butenoate, methyl 2-vinylhexanoate, ethyl 2-ethyl-3-butenoate, methyl 2-vinyl-3-valerate, methyl 2-vinyl-4-methyl-4-pentanoate, ethyl 2,2-dimethyl-3-butenoate, methyl 2-hydroxy-2-methyl-3-butenoate, isobutyl 2-methyl-3-butenoate, ethyl 2-(1-methylethyl)-3-butenoate, methyl 2,2,3-trimethyl-3-butenoate, ethyl 2-vinylhexanoate, methyl 2-ethyl-2-methyl-3-butenoate, methyl 3-methyl-5-hexenoate, methyl 4-methyl-5-hexenoate, ethyl 4-methyl-5-hexenoate, methyl 2-methyl-6-heptenoate, methyl 2,4-dimethyl-5-hexenoate, methyl 2-ethyl-5-hexenoate, methyl 3-methyl-5-hexenoate, methyl 4-methyl-5-hexenoate, methyl 2-ethyl-4-pentenoate, methyl 2-propyl-4-pentenoate, methyl 2-propyl-5-hexenoate, methyl 2-propyl-4-pentenoate, methyl 2-butyl-5-hexenoate, methyl 3-vinylhexanoate, methyl 2-(2-propen-1-yl)-4-pentanoate, methyl 2-(3-buten-1-yl)-5-hexenoate, methyl 3,3-dimethyl-5-hexenoate, ethyl 3-propyl-5-hexenoate, ethyl 3,3-dimethyl-5-hexenoate, methyl 3,4,4-trimethyl-5-hexenoate, ethyl 3-(1,1-dimethylethyl)-5-hexenoate, ethyl 3-methyl-2-oxo-5-hexenoate, methyl 2-vinyl-3,3-dimethyl-5-hexanoate, methyl β-vinylphenylpropionate, benzyl 3-methyl-5-hexenoate, methyl 2-propyl-6-heptenoate, methyl 2-methyl-6-heptenoate, ethyl 2-methyl-6-heptenoate, methyl 2,2-dimethyl-6-heptenoate, ethyl 2,4-dimethyl-6-heptenoate, ethyl 2-propyl-6-heptenoate, ethyl 2,2-dimethyl-6-heptenoate, 1,3-dimethyl 2-(4-penten-1-yl)malonate, 1,1-dimethylethyl 2-methyl-6-heptenoate, tert-butyl 2-methyl-3-butenoate, ethyl 2-isopropyl-3-butenoate, methyl 2-isobutyl-4-pentenoate, methyl 2,2-dimethyl-4-pentenoate, methyl 3,3-dimethyl-4-pentenoate, ethyl 3,3-dimethyl-4-pentenoate, ethyl 2,2-dimethyl-4-pentenoate, methyl 2-n-propyl-4-pentenoate, methyl 2-isopropyl-4-pentenoate, isobutyl 2-methyl-4-pentenoate, diethyl allyl malonate, dimethyl allyl malonate, allyl succinic anhydride, ethyl 2-methyl-4-pentenoate, methyl 2-methyl-4-pentenoate, methyl 3-methyl-4-pentenoate, methyl 3-ethyl-4-pentenoate, isobutyl 3-methyl-4-pentenoate, ethyl 2-tert-butyl-4-pentenoate, 3-allyldihydrofuran-2(3H)-one, methyl 2-dimethylamino-2-methyl-4-pentenoate, methyl 3-methyl-4-pentenoate, methyl 2-methyl-5-hexenoate, methyl 2,2-dimethyl-5-hexenoate, ethyl 2,2-dimethyl-5-hexenoate, benzyl 2-methyl-5-hexenoate, methyl 4,4-dimethyl-6-heptenoate, and methyl 2,4-dimethyl-9-decenoate.

In some embodiments,
the cocatalyst is selected from the group consisting of organoaluminum compounds and/or organoboron compounds;
the organoaluminum compound is one or more selected from the group consisting of alkylaluminoxanes, alkylaluminums and alkyl aluminum halides;
the organoaluminum compound is selected from the group consisting of alkylaluminoxanes and organoaluminum compounds of general formula AlRₙX¹₃₋ₙ (alkylaluminums or alkyl aluminum halides), in which R is H, a C1-C20 saturated or unsaturated hydrocarbyl or a C1-C20 saturated or unsaturated hydrocarbyloxy, preferably a C1-C20 alkyl, a C1-C20 alkoxy, a C₇-C₂₀ aralkyl or a C₆-C₂₀ aryl; X¹ is a halogen, preferably chlorine or bromine; and 0<n≤3. Specific examples of the organoaluminum compound include, but are not limited to, trimethylaluminum, triethylaluminum, triisobutylaluminum, tri-n-hexylaluminum, trioctylaluminum, diethyl aluminum hydride, diisobutyl aluminum hydride, diethyl aluminum chloride, diisobutyl aluminum chloride, ethyl aluminum sesquichloride, ethyl aluminum dichloride, methylaluminoxane (MAO), and modified methyl aluminoxane (MMAO). Preferably, the organoaluminum compound is methylaluminoxane (MAO).

The organoboron compound is selected from the group consisting of aromatic hydrocarbyl boron compounds and borates.

The aromatic hydrocarbyl boron compounds are preferably substituted or unsubstituted phenyl boron, more preferably tris(pentafluorophenyl)boron. The borates are preferably N,N-dimethylanilinium tetrakis(pentafluorophenyl)borate and/or triphenylcarbonium tetrakis(pentafluorophenyl)borate.

The molar ratio of aluminum in the cocatalyst to M in the main catalyst is (10-10⁷):1, preferably (10-100,000):1, more preferably (100-10,000):1, for example, 10:1, 20:1, 50:1, 100:1, 200:1, 300:1, 500:1, 700:1, 800:1, 1,000:1, 2,000:1, 3,000:1, 5,000:1, 10,000:1, 100,000:1, 1,000,000:1, 10,000,000:1, and any value therebetween.

The molar ratio of boron in the cocatalyst to M in the main catalyst is (0.1-1,000): 1, for example, 0.1:1, 0.2:1, 0.5:1, 1:1, 2:1, 3:1, 5:1, 8:1, 10:1, 20:1, 50:1, 100:1, 200:1, 300:1, 500:1, 700:1, 800:1, 1,000:1, and any value therebetween, preferably (0.1-500):1, and the molar ratio of the organoaluminum to M in the main catalyst is (10-10⁵):1.

In some embodiments of the method according to the invention, the temperature of the polymerization reaction ranges from -50°C to 100°C, preferably from -20°C to 60°C, and more preferably from 0°C to 50°C; for example, it can be 0°C, 10°C, 20°C, 30°C, 40°C, 50°C, and any value therebetween; and the reaction time ranges from 10 to 200 min, and preferably from 20 to 60 min.

In the invention, the reaction pressure is not particularly limited as long as the monomers can undergo the coordination copolymerization reaction. When the olefin is ethylene, from the viewpoint of reducing cost and simplifying the polymerization process, the pressure of ethylene in the reactor is preferably from 1 to 1000 atm, more preferably from 1 to 200 atm, and still more preferably from 1 to 50 atm.

As used herein, the term "reaction system" refers to a whole formed by a combination of the solvent, the olefin, the unsaturated carboxylic ester monomer, and the catalyst.

According to a preferred embodiment of the invention, the reaction is carried out under anhydrous and oxygen-free conditions.

In some embodiments, the polymerization reaction is carried out in an alkane solvent, which is one or more of C3-C20 alkanes, preferably C3-C10 alkanes, for example, one or more of butane, isobutane, pentane, hexane, heptane, octane and cyclohexane, preferably one or more of hexane, heptane and cyclohexane.

The concentration of the main catalyst in the reaction system is from 0.00001 to 100 mmol/L, preferably from 0.0001 to 1 mmol/L, and more preferably from 0.001 to 0.5 mmol/L; for example, 0.00001 mmol/L, 0.00005 mmol/L, 0.0001 mmol/L, 0.0005 mmol/L, 0.001 mmol/L, 0.005 mmol/L, 0.01 mmol/L, 0.05 mmol/L, 0.1 mmol/L, 0.3 mmol/L, 0.5 mmol/L, 0.8 mmol/L, 1 mmol/L, 5 mmol/L, 8 mmol/L, 10 mmol/L, 20 mmol/L, 30 mmol/L, 50 mmol/L, 70 mmol/L, 80 mmol/L, 100 mmol/L, and any value therebetween.

The concentration of the unsaturated carboxylic ester monomer in the reaction system is from 0.01 to 6,000 mmol/L, preferably from 0.1 to 1,000 mmol/L, and more preferably from 1 to 500 mmol/L. For example, it can be 1 mmol/L, 10 mmol/L, 20 mmol/L, 30 mmol/L, 50 mmol/L, 70 mmol/L, 90 mmol/L, 100 mmol/L, 200 mmol/L, 300 mmol/L, 400 mmol/L, 500 mmol/L and any value therebetween.

In some embodiments, the unsaturated carboxylic ester is subjected in advance to a carbonyl protection treatment. Preferably, the carbonyl group in the unsaturated carboxylic ester is pretreated with an alkylaluminum or an alkylsilicon of formula SiRₘXₙ, in which R's are independently a C1-C10 alkyl, X is a halogen, m≥1, and m+n=4.

Preferably, during the pretreatment, the molar ratio of the carbonyl in the unsaturated carboxylic ester to the alkylaluminum or alkylsilicon (SiRₘXₙ) is from 10:1 to 1:10.

Another object of the invention is to provide a polymer obtained by the preparation method.

According to a preferred embodiment of the invention, the polymer as-polymerized is spherical and/or sphere-like, with an average particle size ranging from 0.05 to 50.0 mm, preferably from 0.5 to 20.0 mm, and more preferably from 1 to 10 mm, for example, being 0.05 mm, 0.1 mm, 0.5 mm, 1.0 mm, 2.0 mm, 3.0 mm, 5.0 mm, 8.0 mm, 10.0 mm, 15.0 mm, 20.0 mm, 25.0 mm, 30.0 mm, 35.0 mm, 40.0 mm, 45.0 mm, 50.0 mm and any value therebetween. As used herein, the phrase "as-polymerized" means that the polymer is obtained directly from the polymerization reaction without undergoing post-processing such as pelletizing to alter the morphology and size of the polymer particles.

In the invention, the particle size of a spherical or sphere-like polymer particle is considered herein to be equal to the diameter of a sphere having the same volume as the particle.

The polymer has a hollow structure. The polymer has a density of from 0.2000 to 0.8500 g/cm³, and preferably from 0.2000 to 0.7500 g/cm³, and a weight average molecular weight of from 5,000 to 1,000,000, and preferably from 5,000 to 800,000 or from 10,000 to 600,000. Preferably, the polymer has a density of from 0.3000 to 0.8500 g/cm³, and preferably from 0.4000 to 0.7500 g/cm³; a weight average molecular weight of from 10,000 to 600,000, and preferably from 30,000 to 500,000 or from 30,000 to 300,000 or from 60,000 to 300,000; and a molecular weight distribution of ≤ 4.0, preferably from 1.0 to 4.0, for example 0.1, 0.5, 1.0, 1.5, 2.0, 2.5, 3.0, 3.5, 4.0 and any value therebetween.

In the polymer, the content of the structural units derived from the unsaturated carboxylic ester represented by the formula G is from 0.1 to 30.0 mol%, preferably from 0.1 to 10.0 mol%, and more preferably from 0.1 to 5.0 mol%, or preferably from 0.7 to 10.0 mol%, for example, 0.1 mol%, 0.2 mol%, 0.3 mol%, 0.4 mol%, 0.5 mol%, 0.7 mol%, 0.8 mol%, 1.0 mol%, 1.5 mol%, 2.0 mol%, 5.0 mol%, 8.0 mol%, 10.0 mol%, 15.0 mol%, 20.0 mol%, 25.0 mol%, 30.0 mol% and any value therebetween.

The symbols used in different general formulae or structural formulae in this application, such as R¹, R², R³, R⁴, R⁵, R⁶, R⁷, R⁸, R⁹, R¹⁰, R¹¹, R₁₂, R₂₂, R₂₃, R₂₄, R₃₁, R₃₂, X, M, Y, etc., are used in the same meaning in the individual general formulae or structural formulae unless otherwise specified.

In the disclosure, C1-C20 alkyl refers to C1-C20 linear alkyl or C3-C20 branched alkyl, including, but not limited to, methyl, ethyl, n-propyl, isopropyl, n-butyl, sec-butyl, isobutyl, tert-butyl, n-pentyl, isopentyl, tert-amyl, neopentyl, n-hexyl, n-heptyl, n-octyl and n-decyl.

Examples of C3-C20 cycloalkyl include, but are not limited to, cyclopropyl, cyclopentyl, cyclohexyl, 4-methylcyclohexyl, 4-ethylcyclohexyl, 4-n-propylcyclohexyl, and 4-n-butylcyclohexyl.

Examples of C6-C20 aryl include, but are not limited to, phenyl, 4-methylphenyl, 4-ethylphenyl, dimethylphenyl, and vinylphenyl.

C2-C20 alkenyl refers to C1-C20 linear alkenyl or C3-C20 branched alkenyl, including, but not limited to, vinyl, allyl, and butenyl.

Examples of C7-C20 aralkyl include, but are not limited to, phenylmethyl, phenylethyl, phenyl-n-propyl, phenylisopropyl, phenyl-n-butyl, and phenyl-tert-butyl.

Examples of C7-C20 alkaryl include, but are not limited to, tolyl, ethylphenyl, n-propylphenyl, isopropylphenyl, n-butylphenyl, and t-butylphenyl.

Still another object of the invention is to provide use of the polymer as a polyolefin material.

Compared with the conventional polyethylene particles with good particle morphology prepared by supported catalysts, the polymer according to the invention has a lower apparent density because of its specific hollow structure, and can be directly used as a lightweight foaming material.

### Invention effects:

The method for the preparation of a copolymer provided by the invention uses a novel catalyst containing a trinuclear metal complex. The catalyst has not been reported, and the technical problem solved by the invention is therefore to provide a new method for preparing olefin-unsaturated carboxylic ester copolymer.

Further, in the method for preparing olefin-unsaturated carboxylic ester copolymer provided by the invention, by selecting the reacted unsaturated carboxylic ester monomer, catalyst and suitable polymerization process, spherical and/or sphere-like polymers with good morphology can be directly prepared without subsequent processing steps such as granulation, and the resultant polymer products are not prone to fouling in the reactor and are convenient for transportation.

Further, the method for preparing olefin-unsaturated carboxylic ester copolymer provided by the invention utilizes milder preparation conditions and can omit post-processing process of granulation, compared to the high-pressure polymerization process used in the existing industry for preparing olefin-unsaturated carboxylic ester copolymer.

### Description of drawings

FIG. 1 is a photograph of the spherical and/or sphere-like polymer obtained in the inventive Example 9.
FIG. 2 is an electron microscope photograph of the polymer obtained in Example 35.

### Examples

The present invention will be described in detail below in conjunction with the drawings and examples. It is necessary to point out that the following examples are used only to further illustrate the present invention, and should not be construed as limiting the protection scope of the present invention. Some non-essential improvements and adjustments to the present invention made by those skilled in the art in light of the disclosures still fall within the protection scope of the present invention.

The analytical characterization instruments used herein are as follows:
1. ¹H NMR nuclear magnetic resonance instrument: Bruker DMX 300 (300MHz), used to determine the structure of the complex ligand at 25°C, with tetramethyl silicon (TMS) as the internal standard.
2. Comonomer content of the polymer (content of structural units derived from the unsaturated carboxylic ester represented by the formula G): measured through ¹H NMR and ¹³C NMR spectra recorded on a 400MHz Bruker Avance 400 nuclear magnetic resonance spectrometer, using a 10mm PASEX 13 probe, with the polymer sample being dissolved in 1,2,4-trichlorobenzene at 120°C.
3. Molecular weight and molecular weight distribution PDI (PDI=Mw/Mn) of polymer: measured by PL-GPC220 chromatograph, with trichlorobenzene as solvent, at 150°C (standard sample: PS; flow rate: 1.0mL/min; Columns: 3×Plgel 10um M1×ED-B 300×7.5nm).
4. Activity measurement method: (polymer weight (g) × 60) / nickel (mol) × reaction time (min).
5. Polymer density: measured according to GB/T 6343-2009.

The structure of the complexes used in Examples 1-11 is represented by Formula III:

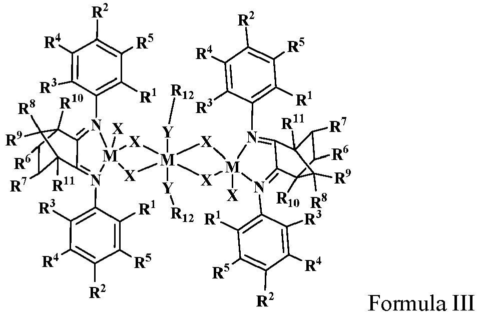

### Example 1

### 1) Preparation of ligand L1:

Under nitrogen atmosphere, 2,6-diethylaniline (2.0 ml, 12 mmol) was dissolved in 20 ml of toluene, and 12 ml of trimethylaluminum (1.0 mol/L, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, dried over anhydrous magnesium sulfate, and then subjected to a column chromatography with petroleum ether/ethyl acetate as an eluent to afford yellow ligand L₁. Yield: 69.2 %. ¹H-NMR (CDCl₃): δ 6.94-6.92 (m, 6H, C_{Ar}-CH₃), 2.56-2.51 (m, 4H, C_{Ar}-CH₃), 2.36-2.31 (m, 4H, C_{Ar}-CH₃), 1.82-1.78 (m, 4H, CH₂), 1.54 (m, 1H), 1.24-1.18 (m, 12H), 1.09 (s, 3H, CH₃), 0.94 (m, 6H, CH₃).

### 2) Preparation of Complex Ni₁ (represented by Formula III, wherein R¹, R³ are ethyl; R², R⁴-R⁷, R¹⁰ are hydrogen; R⁸, R⁹, R¹¹ are methyl; R₁₂ is ethyl; M is nickel; Y is O; and X is Br):

A solution of 0.277 g (0.9 mmol) of (DME)NiBr₂ in ethanol (10 mL) was added slowly dropwise to a solution of 0.258 g (0.6 mmol) of ligand L₁ in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₁ as brownish-red powdery solids. Yield: 78.2 %. Elemental analysis (calculated for C₆₄H₉₀Br₆N₄Ni₃O₂): C, 47.96; H, 5.66; N, 3.50; experimental value (%): C, 47.48; H, 6.00; N, 3.26.

### 3) Polymerization:

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 47 µL (0.30 mmol) of methyl 3,3-dimethyl-4-pentenoate, 0.30 mL of AlEt₃ (1.0 mol/L solution in hexane), and 25 µL of MAO (1.53 mol/L solution in toluene) were charged into the polymerization system, and then 12.5 µL of complex Ni₁ (1.0 mmol/L solution) was added thereto. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1. The content of the unsaturated carboxylic ester in the polymer as measured by NMR analysis was 0.63 mol%.

### Example 2

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 47 µL (0.30 mmol) of methyl 3,3-dimethyl-4-pentenoate, 0.3 mL of AlEt₃ (1.0 mol/L solution in hexane), 50 µL of AlMe₃ (0.1 mol/L solution in heptane), 12.5 µL of tris(pentafluorophenyl)borane (0.01 mol/L solution in toluene), 12.5 µL of N,N-dimethylanilinium tetrakis(pentafluorophenyl)borate (0.01 mol/L solution in toluene) were charged into the polymerization system, and then 12.5 µL of complex Ni₁ (1.0 mmol/L solution in toluene) was added thereto. The reaction was stirred at 10 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1.

### Example 3

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.10 mL (0.61 mmol) of ethyl 2-methyl-4-pentenoate, 156 µL of AliBu₃ (0.61 mmol), 50 µL of triisobutylaluminum (0.1 mol/L solution in heptane), 12.5 µL of tris(pentafluorophenyl)borane (0.01 mol/L), and 12.5 µL of triphenylcarbonium tetrakis(pentafluorophenyl)borate (0.01 mol/L solution in toluene) were charged into the polymerization system, and then 12.5 µL of complex Ni₁ (1.0 mmol/L solution in toluene) was added thereto. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1. The content of the unsaturated carboxylic ester in the polymer as measured by NMR analysis was 0.92 mol%.

### Example 4

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.5 mL (3.50 mmol) of ethyl 2-methyl-3-butenoate, and 0.57 mL of diisopropyldichlorosilane were charged into the polymerization system, and the contents were stirred for 2h. Next, 50 µL of AlMe₃ (0.1 mol/L solution in heptane), 25.0 µL of tris(pentafluorophenyl)borane (0.01 mol/L solution in toluene), and 37.5 µL of N,N-dimethylanilinium tetrakis(pentafluorophenyl)borate (0.01 mol/L solution in toluene) were added thereto, followed by the addition of 12.5 µL of complex Ni₁ (1.0 mmol/L solution in toluene). The reaction was stirred at 30 °C for 60 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1. The content of the unsaturated carboxylic ester in the polymer as measured by NMR analysis was 2.06 mol%.

### Example 5

### 1) Preparation of ligand L2:

Under nitrogen atmosphere, 2,4,6-trimethyl-aniline (1.7 ml, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L2. Yield: 62.5%. ¹HNMR (300 MHz, CDCl₃), δ (ppm) [with an isomer ratio of 1.2:1]: major isomer: 6.72 (s, 4H, Ar-H), 2.26-2.13 (m, 12H, C_{Ar}-CH₃), 1.87 (s, 6H, C_{Ar}-CH₃), 1.79 (m, 4H, CH₂), 1.42 (m, 1H), 1.26 (s, 3H, CH₃), 1.07 (s, 6H, CH₃); minor isomer: 6.67 (s, 4H, Ar-H), 2.09-2.01 (m, 12H, C_{Ar}-CH₃), 1.85 (s, 6H, C_{Ar}-CH₃), 1.79 (m, 4H, CH₂), 1.40 (m, 1H), 1.26 (s, 3H, CH₃), 0.94 (s, 6H, CH₃).

### 2) Preparation of complex Niz (represented by Formula III, wherein R¹-R³ are methyl; R⁴-R⁷, R¹⁰ are hydrogen; R⁸, R⁹ and R¹¹ are methyl; R₁₂ is ethyl; M is nickel; Y is O; and X is Br):

A solution of 0.277 g (0.9 mmol) of (DME)NiBr₂ in ethanol (10 mL) was added slowly dropwise to a solution of 0.240 g (0.6 mmol) of ligand L2 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₂ as brownish-red powdery solids. Yield: 78.6 %. Elemental analysis (calculated for C₆₀H₈₂Br₆N₄Ni₃O₂): C, 46.59; H, 5.34; N, 3.62; experimental value (%): C, 46.24; H, 5.67; N, 3.21.

### 3) Polymerization:

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.63 mmol) of methyl 3,3-dimethyl-4-pentenoate, 160 µL of AliBu₃ (0.63 mmol), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, followed by the addition of 12.5 µL of complex Ni₂ (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1.

### Example 6

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of isobutyl 2-methyl-3-butenoate, 146 µL of AliBu₃ (0.58 mmol), 50 µL of AlEt₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged thereto, followed by the addition of 12.5 µL of complex Ni₂ (1.0 mmol/L solution in toluene). The reaction was vigorously stirred at 50 °C for 30 minutes, with ethylene pressure being maintained at 15 atm. The reaction mixture was neutralized with an ethanol solution acidified with 10 wt% hydrochloric acid to obtain a polymer. The results are shown in Table 1. The content of the unsaturated carboxylic ester in the polymer as measured by NMR analysis was 0.78 mol%.

### Example 7

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.500 mL (3.16 mmol) of methyl 3,3-dimethyl-4-pentenoate, and 0.57 mL of diisopropyldichlorosilane were charged thereto, and the contents were stirred for 2h. Next, 50 µL of AlMe₃ (0.1 mol/L solution in heptane), 12.5 µL of tris(pentafluorophenyl)borane (0.01 mol/L solution in toluene), and 37.5 µL of N,N-dimethylanilinium tetrakis(pentafluorophenyl)borate (0.01 mol/L solution in toluene) were added thereto, followed by the addition of 6.2 µL of complex Ni₂ (1.0 mmol/L solution in toluene). The reaction was vigorously stirred at 30 °C for 60 minutes, with ethylene pressure being maintained at 10 atm. The reaction mixture was neutralized with an ethanol solution acidified with 10 wt% hydrochloric acid to obtain a polymer. The results are shown in Table 1. The content of the unsaturated carboxylic ester in the polymer as measured by NMR analysis was 2.16 mol%.

### Example 8

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (0.61 mmol), 50 µL of AlMe₃ (0.1 mol/L solution in heptane), 6.2 µL of tris(pentafluorophenyl)borane (0.01 mol/L solution in toluene), and 6.2 µL of N,N-dimethylanilinium tetrakis(pentafluorophenyl)borate (0.01 mol/L solution in toluene) were charged into the polymerization system, followed by the addition of 12.5 µL of complex Niz (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1.

### Example 9

After having been continuously dried at 130°C for 2hrs, a 1L stainless steel polymerization autoclave equipped with mechanical stirring was vacuumed while hot and then filled with N₂ gas 3 times. 450 mL of hexane, 100 µL (0.58 mmol) of methyl 2-isopropyl-4-pentenoate, 15.6 mL of AliBu₃ (61.4 mmol), 0.5 mL of AlMe₃ (1.0 mol/L solution in heptane), 6.4 mg (12.5 µmol) of tris(pentafluorophenyl)borane, and 11.5 mg (12.5 µmol) of triphenylcarbonium tetrakis(pentafluorophenyl)borate were charged into the polymerization system, followed by the addition of 1.9 mg (1.25 µmol) of complex Niz. The reaction was stirred at 20 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1. The content of the unsaturated carboxylic ester in the polymer as measured by NMR analysis was 0.96 mol%. The obtained polymer was in the form of granules, the particle size was 3.82 mm, the polymer had a hollow structure, and the density of the obtained polymer was 0.4182 g/cm³.

### Example 10

### 1) Preparation of ligand L3:

Under nitrogen atmosphere, 2,6-dimethyl-4-bromo-aniline (2.45 g, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Camphorquinone (0.831 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L3. Yield: 60.7%. ¹HNMR (300 MHz, CDCl₃), δ (ppm) [with an isomer ratio of 1.1:1]: major isomer: 7.05 (s, 4H, Ar-H), 2.18 (m, 12H, C_{Ar}-CH₃), 1.85 (m, 4H, CH₂), 1.37 (m, 1H), 1.26 (s, 3H, CH₃), 1.06 (s, 6H, CH₃); minor isomer: 7.02 (s, 4H, Ar-H), 2.04 (m, 12H, C_{Ar}-CH₃), 1.85 (m, 4H, CH₂), 1.37 (m, 1H), 1.26 (s, 3H, CH₃), 0.96 (s, 6H, CH₃).

### 2) Preparation of complex Ni₃ (represented by Formula III, wherein R¹, R³ are methyl; R² is Br; R⁴-R⁷, R¹⁰ are hydrogen; R⁸, R⁹ and R¹¹ are methyl; R₁₂ is ethyl; M is nickel, Y is O, and X is Br):

A solution of 0.277 g (0.9 mmol) of (DME)NiBr₂ in ethanol (10 mL) was added slowly dropwise to a solution of 0.318 g (0.6 mmol) of ligand L3 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₃ as brownish-red powdery solids. Yield: 74.1 %. Elemental analysis (calculated for C₅₆H₇₀Br₁₀N₄Ni₃O₂): C, 37.24; H, 3.91; N, 3. 10; experimental value (%): C, 37.38; H, 4.30; N, 3.03.

### 3) Polymerization:

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (0.61 mmol), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, followed by the addition of 12.5 µL of complex Ni₃ (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1.

### Example 11

### 1) Preparation of ligand L4:

Under nitrogen atmosphere, 2,6-diisopropyl-aniline (2.30 ml, 12 mmol) was dissolved in 20 ml of toluene, and 12 ml of trimethylaluminum (1.0M, 12 mmol) was added dropwise at normal temperature. The reaction was refluxed for 2 hours, and the system was then cooled to room temperature. Dione B 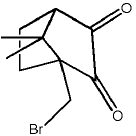 (1.225 g, 5 mmol) was added thereto, and the system was refluxed for 6h. The reaction product was neutralized with aqueous sodium hydroxide solution, extracted with dichloromethane, and dried, and then subjected to a column chromatography to afford yellow ligand L4. Yield: 62.7%. ¹H NMR (300 MHz, CDCl₃), δ (ppm): 7.05-6.83 (m, 6H, Ar-H), 3.30 (m, 2H, CH₂), 2.80 (m, 4H, CH(CH₃)₂), 1.55 (m, 1H), 1.83 (m, 4H, CH₂), 1.26 (d, 24H, CH(CH₃)₂), 0.99 (s, 6H, CH₃).

### 2) Preparation of complex Ni₄ (represented by the structural formula III, wherein R¹, R³ are isopropyl; R², R⁴-R⁷, R¹⁰ are hydrogen; R⁸, R⁹ are methyl; R¹¹ is CH₂Br; R₁₂ is ethyl; M is nickel, Y is O, and X is Br):

A solution of 0.277 g (0.9 mmol) of (DME)NiBr₂ in ethanol (10mL) was added slowly dropwise to a solution of 0.338 g (0.6 mmol) of ligand L4 in dichloromethane (10mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₄ as brownish-red powdery solids. Yield: 80.2 %. Elemental analysis (calculated for C₇₂H₁₀₄Br₈N₄Ni₃O₂): C, 46.17; H, 5.60; N, 2.99; experimental value (%): C, 46.24; H, 5.80; N, 3.13.

### 3) Polymerization:

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of isobutyl 2-methyl-3-butenoate, 146 µL of AliBu₃ (95%), 50 µL of AlEt₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged thereto, followed by the addition of 12.5 µL of complex Ni₄ (1.0 mmol/L solution in toluene). The reaction was vigorously stirred at 10 °C for 10 minutes, with ethylene pressure being maintained at 10 atm. The reaction mixture was neutralized with an ethanol solution acidified with 10 wt% hydrochloric acid to obtain a polymer. The results are shown in Table 1. The content of the unsaturated carboxylic ester in the polymer as measured by NMR analysis was 0.16 mol%.

### Comparative Example 1

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.71 mmol) of methyl 5-hexenoate, 114 µL of AliBu₃ (95%), 50 µL of AlEt₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, followed by the addition of 12.5 µL of complex Niz (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1.

### Comparative Example 2

This comparative example was carried out as described in Comparative Example 1, except that the catalyst used was different. In this comparative example, 0.025 µmol of comparative catalyst H was used.

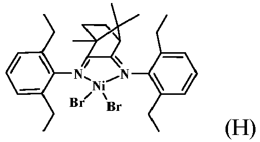

**Table 1**

| No. | Complex | Polymerization Activity 10⁶g·mol⁻¹(Ni)·h⁻¹ | Mw (×10⁴) | PDI | Is there a spherical or sphere-like polymer in the copolymer?/Particle size (mm) |
|---|---|---|---|---|---|
| Example 1 | Ni₁ | 6.82 | 10.87 | 3.24 | Yes/0.90 |
| Example 2 | Ni₁ | 4.39 | 32.94 | 2.58 | Yes/0.97 |
| Example 3 | Ni₁ | 7.24 | 10.32 | 2.54 | Yes/0.93 |
| Example 4 | Ni₁ | 4.46 | 13.47 | 2.55 | Yes/1.22 |
| Example 5 | Ni₂ | 7.61 | 9.23 | 3.42 | Yes/1.20 |
| Example 6 | Ni₂ | 8.92 | 14.22 | 3.27 | Yes/1.43 |
| Example 7 | Ni₂ | 6.82 | 12.94 | 3.43 | Yes/1.54 |
| Example 8 | Ni₂ | 7.91 | 10.32 | 2.97 | Yes/1.07 |
| Example 9 | Ni₂ | 10.80 | 18.36 | 3.43 | Yes/3.82 |
| Example 10 | Ni₃ | 6.42 | 7.32 | 4.13 | Yes/1.21 |
| Example 11 | Ni₄ | 8.37 | 58.24 | 3.86 | Yes/1.82 |
| Comp. Ex. 1 | Ni₂ | 2.94 | 10.28 | 3.42 | No |
| Comp. Ex. 2 | H | 2.29 | 9.37 | 3.63 | No |

It can be seen from Table 1 that when the catalysts of the invention catalyze the copolymerization of ethylene with an unsaturated carboxylic ester, they exhibit higher polymerization activities. The copolymerization activities of the catalysts of the invention can be up to 10.8×10⁶g·mol⁻¹(Ni)·h⁻¹. The comonomer content of the polymer obtained in Example 7 can be up to 2.1%. In addition, by adjusting polymerization conditions, copolymer products with good particle morphology can be obtained without subsequent processing steps such as granulation, and the resultant polymer products are not prone to fouling in the reactor and are convenient for transportation.

The ligands and complexes used in examples 12-20 are represented by formula K and formula VI, respectively:

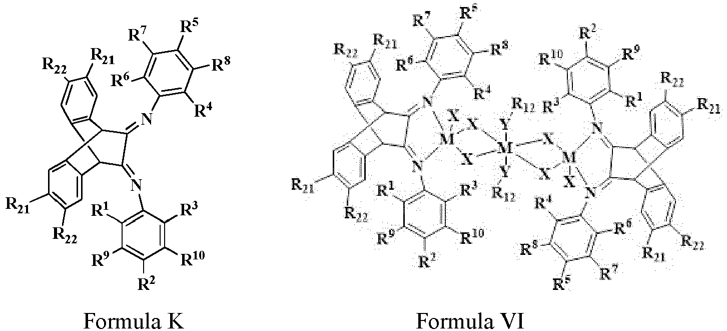

### Example 12

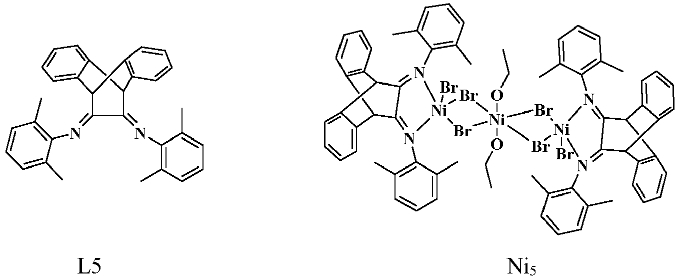

Ligand L5 (represented by the structural Formula K, wherein R¹, R³, R⁴, and R⁶ are methyl, R², R⁵, R⁷-R¹⁰, R₂₁, and R₂₂ are hydrogen) was prepared by following the literature Organometallics, 2013, 32, 2291-2299.

Preparation of complex Ni₅ (represented by the structural formula VI, wherein R¹, R³, R⁴, and R⁶ are methyl, R², R⁵, R⁷-R¹⁰, R₂₁ and R₂₂ are hydrogen, R₁₂ is ethyl, M is nickel, Y is O, and X is Br):
A solution of 0.277 g (0.9 mmol) of (DME)NiBr₂ in ethanol (10 mL) was added slowly dropwise to a solution of 0.264 g (0.6 mmol) of ligand L5 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₅ as brownish-red powdery solids. Yield: 78.2 %. Elemental analysis (calculated for C₆₈H₆₆Br₆N₄Ni₃O₂): C, 50.21; H, 4.09; N, 3.44; experimental value (%): C, 50.38; H, 4.22; N, 3.76.

### 3) Polymerization:

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.30 mmol (47 µL) of methyl 3,3-dimethyl-4-pentenoate, 0.30 mL of AlEt₃ (1.0 mol/L solution in hexane), and 25 µL of MAO (1.53 mol/L solution in toluene) were charged into the polymerization system, followed by the addition of 12.5 µL of complex Ni₅ (1.0 mmol/L solution in toluene). The reaction was stirred at 30 °C for 30 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2.

### Example 13

Polymerization: After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.30 mmol (47 µL) of methyl 3,3-dimethyl-4-pentenoate, 0.30 mL of AlEt₃ (1.0 mol/L solution in hexane), 50 µL of AlMe₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, and 12.5 µL of complex Ni₅ (1.0 mmol/L solution in toluene) was added simultaneously. The reaction was stirred at 30 °C for 30 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2, and the comonomer content of the obtained polymer was 0.84 mol%. The content of the unsaturated carboxylic ester in the polymer as measured by NMR analysis was 0.84 mol%.

### Example 14

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL (0.61 mmol) of AliBu₃, 50 µL of triisobutylaluminum (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, followed by the addition of 12.5 µL of complex Ni₅ (1.0 mmol/L solution in toluene). The reaction was stirred at 30 °C for 30 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2.

### Example 15

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.50 mL (3.16 mmol) of methyl 3,3-dimethyl-4-pentenoate, and 0.57 mL diisopropyldichlorosilane were charged into the polymerization system, and the contents were stirred for 2hrs. Then, 50 µL of AlMe₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were added thereto, and 12.5 µL of complex Ni₅ (1.0 mmol/L solution in toluene) was added simultaneously. The reaction was stirred at 30 °C for 60 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2, and the comonomer content of the obtained polymer was 1.25 mol%. The content of the unsaturated carboxylic ester in the polymer as measured by NMR analysis was 1.45 mol%.

### Example 16

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL (0.61 mmol) of AliBu₃, 50 µL of AlMe₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, and 12.5 µL of complex Ni₅ (1.0 mmol/L solution in toluene) was added simultaneously. The reaction was stirred at 50 °C for 10 minutes, with ethylene pressure being maintained at 20 atm. Finally, the reaction mixture was neutralized with an ethanol solution acidified with 10 wt% hydrochloric acid to obtain a polymer. The polymerization activity and the performance parameters of the polymer are shown in Table 2.

### Example 17

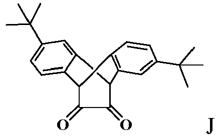

Preparation of ligand L6 (represented by the structural formula K, wherein R¹, R³, R⁴, R⁶ are methyl; R², R⁵ are bromine; R⁷-R¹⁰, R₂₂ are hydrogen; and R₂₁ is tert-butyl): Compound J (1.77 g, 5.1 mmol) and 2,6-dimethyl-4-bromo-aniline (2.3 g, 11.3 mmol) were refluxed, in the presence of p-toluenesulfonic acid as a catalyst, in 100 mL of toluene for 1 day. The solvent was removed after filtration, and the residue was dissolved in dichloromethane and separated by column chromatography with petroleum ether/ethyl acetate as an eluant, to afford yellow solids L6. Yield: 78 %. ¹H NMR (CDCl₃, δ ppm): 1.84 (s, 12H), 1.19 (s, 18H), 4.70 (s, 2H), 7.04 (8H), 7.12 (s, 2H).

Preparation of complex Ni₆ (represented by the structural formula VI, wherein R¹, R³, R⁴, R⁶ are methyl; R², R⁵ are bromine; R⁷-R¹⁰, R₂₂ are hydrogen; R₂₁ is tert-butyl; R₁₂ is ethyl; M is nickel, Y is O, and X is Br):
A solution of 0.277 g (0.9 mmol) of (DME)NiBr₂ in ethanol (10 mL) was added slowly dropwise to a solution of 0.426 g (0.6 mmol) of ligand L6 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₆ as brownish-red powdery solids. Yield: 82.0 %. Elemental analysis (calculated for C₈₄H₉₄Br₁₀N₄Ni₃O₂): C, 46.56; H, 4.37; N, 2.59; experimental value (%): C, 46.43; H, 4.72; N, 2.98.

Polymerization: After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of isobutyl 2-methyl-3-butenoate, 146 µL (0.58 mmol) of AliBu₃ (95%), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, and 12.5 µL of complex Ni₆ (1.0 mmol/L solution in toluene) was added simultaneously. The reaction was stirred at 30 °C for 30 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2.

### Example 18

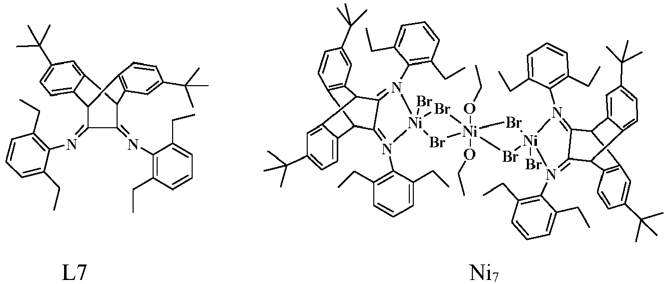

1) Ligand L7 was prepared by following Patent CN106397264.
2) Preparation of complex Ni₇ (represented by the structural formula VI, wherein R¹, R³, R⁴ and R⁶ are ethyl, R², R⁵, R⁷-R¹⁰ and R₂₂ are hydrogen, R₂₁ is tert-butyl, R₁₂ is ethyl, M is nickel, Y is O, and X is Br):
   A solution of 0.277 g (0.9 mmol) of (DME)NiBr₂ in ethanol (10 mL) was added slowly dropwise to a solution of 0.365 g (0.6 mmol) of ligand L7 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₇ as brownish-red powdery solids. Yield: 82.0 %. Elemental analysis (calculated for C₉₂H₁₁₄Br₆N₄Ni₃O₂): C, 56.28; H, 5.85; N, 2.85; experimental value (%): C, 56.43; H, 6.12; N, 3.08.
3) Polymerization: After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of methyl 2-isopropyl-4-pentenoate, 146 µL (0.58 mmol) of AliBu₃, 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, and 12.5 µL of complex Ni₇ (1.0 mmol/L solution in toluene) was added simultaneously. The reaction was stirred at 30 °C for 30 minutes, with ethylene pressure being maintained at 14 atm. Finally, the reaction mixture was neutralized with an ethanol solution acidified with 10 wt% hydrochloric acid to obtain a polymer. The polymerization activity and the performance parameters of the polymer are shown in Table 2.

### Example 19

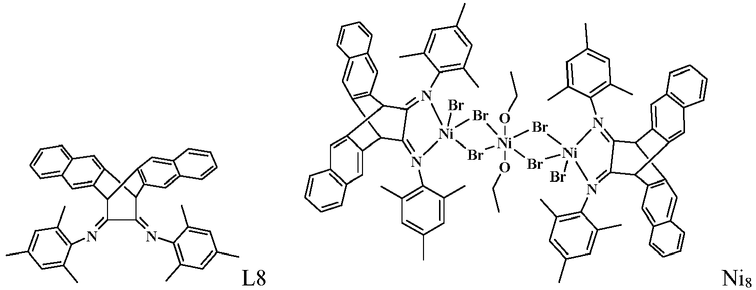

1) Ligand L8 was prepared by following patent application CN201510462932.2.
2) Preparation of complex Ni₈: A solution of 0.277 g (0.9 mmol) of (DME)NiBr₂ in ethanol (10 mL) was added slowly dropwise to a solution of 0.341 g (0.6 mmol) of ligand L8 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni₈ as brownish-red powdery solids. Yield: 82.1 %. Elemental analysis (calculated for C₈₈H₈₂Br₆N₄Ni₃O₂): C, 56.13; H, 4.39; N, 2.98; experimental value (%): C, 56.28; H, 4.62; N, 3.24.
3) Polymerization: After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of isobutyl 2-methyl-3-butenoate, 146 µL (0.58 mmol) of AliBu₃, 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged thereto, followed by the addition of 12.5 µL of complex Ni₈ (1.0 mmol/L solution in toluene) was added simultaneously. The reaction was stirred at 30 °C for 30 minutes, with ethylene pressure being maintained at 14 atm. The reaction mixture was neutralized with an ethanol solution acidified with 10 wt% hydrochloric acid to obtain a polymer. The results are shown in Table 2.

### Example 20

Polymerization: After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (57.5 mmol) of isobutyl 2-methyl-3-butenoate, 14.6 mL of AliBu₃ (95%), 0.5 mL of AlMe₃ (1.0 mol/L solution in heptane), 12.8 mg (25.0 µmol) of tris(pentafluorophenyl)borane, and 34.5 mg (37.5 µmol) of triphenylcarbonium tetrakis(pentafluorophenyl)borate were charged thereto, followed by the addition of 2.4 mg (1.25 µmol) of complex Ni₈. The reaction was vigorously stirred at 20 °C for 30 minutes, with ethylene pressure being maintained at 14 atm. The reaction mixture was neutralized with an ethanol solution acidified with 10 wt% hydrochloric acid to obtain a polymer. The results are shown in Table 2. The density of the obtained polymer was 0.6842 g/cm³.

### Comparative Example 3

10 atm Ethylene Polymerization: After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.71 mmol) of methyl 5-hexenoate, 114 µL (0.44 mmol) of AliBu₃, and 25 µL of MAO (1.53 mol/L solution in toluene) were charged thereto, and 37.5 µL of comparative catalyst T (having a structure shown below) (1.0 mmol/L solution in toluene) was added simultaneously. The reaction was vigorously stirred at 30 °C for 30 minutes, with ethylene pressure being maintained at 14 atm. The reaction mixture was neutralized with an ethanol solution acidified with 10 wt% hydrochloric acid to obtain a polymer. The results are shown in Table 2. The comonomer content of the resulting polymer was 0.53 mol%.

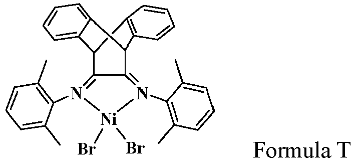

**Table 2**

| No. | Complex | Polymerization Activity 10⁶g·mol⁻¹(Ni)·h⁻¹ | Mw (×10⁴) | PDI | Is there a spherical or sphere-like polymer in the copolymer?/Particle size (mm) |
|---|---|---|---|---|---|
| Example 12 | Ni₅ | 1.54 | 6.42 | 4.37 | Yes/1.12 |
| Example 13 | Ni₅ | 2.04 | 5.32 | 3.54 | Yes/1.13 |
| Example 14 | Ni₅ | 1.27 | 3.21 | 3.44 | Yes/1.10 |
| Example 15 | Ni₅ | 0.94 | 1.76 | 3.13 | Yes/1.89 |
| Example 16 | Ni₅ | 4.27 | 10.22 | 3.44 | Yes/1.54 |
| Example 17 | Ni₆ | 2.57 | 7.62 | 3.28 | Yes/1.14 |
| Example 18 | Ni₇ | 4.24 | 21.47 | 3.62 | Yes/1.82 |
| Example 19 | Ni₈ | 4.36 | 7.33 | 3.45 | Yes/1.52 |
| Example 20 | Ni₈ | 6.42 | 23.27 | 3.25 | Yes/3.32 |
| Comp. Ex. 3 | T | 0.77 | 3.24 | 3.20 | No |

It can be seen from Table 2 that, compared to the comparative example, the catalysts of the invention exhibit higher polymerization activities when catalyzing the copolymerization of ethylene with an unsaturated carboxylic ester. The copolymerization activities of the catalysts of the invention can be up to 6.42×10⁶g·mol⁻¹(Ni)·h⁻¹. In addition, by adjusting polymerization conditions, copolymer products with good particle morphology can be obtained without subsequent processing steps such as granulation, and the resultant polymer products are not prone to fouling in the reactor and are convenient for transportation.

The following ligands and complexes are involved in the description of the following examples 21-31: 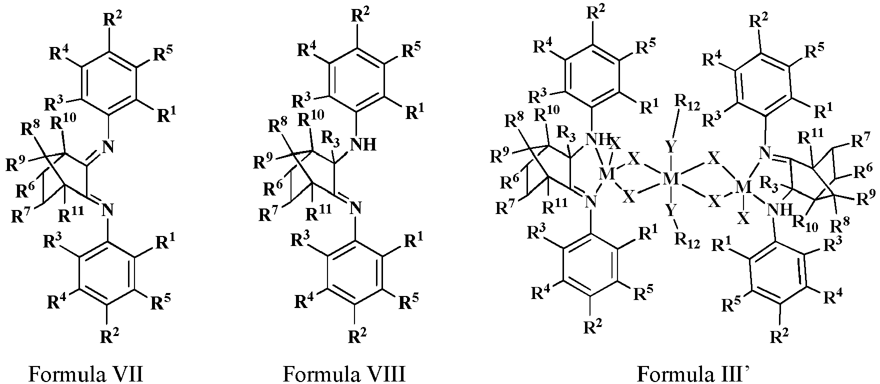
A2 is the α-diimine compound represented by Formula VII, wherein R¹=R³=iPr, R²=R⁴=R⁵=R⁶=R⁷=R¹⁰=H, R⁸=R⁹=R¹¹=CH₃;
ligand L9 is the aminoimine compound represented by Formula VIII, wherein R¹=R³=Me, R²=R⁴=R⁵=R⁶=R⁷=R¹⁰=H, R⁸=R⁹=R¹¹=CH₃, R₃=CH₃;
ligand L10 is the aminoimine compound represented by Formula VIII, wherein R¹=R³=iPr, R²=R⁴=R⁵=R⁶=R⁷=R¹⁰=H, R⁸=R⁹=R¹¹=CH₃; R₃=CH₃;
ligand L11 is the aminoimine compound represented by Formula VIII, wherein R¹=R³=iPr, R²=R⁴=R⁵=R⁶=R =R¹⁰=H, R⁸=R⁹=R¹¹=CH₃; R₃=Et;
complex Ni9 is the complex represented by Formula III', wherein R¹=R³=Me, R²=R⁴=R⁵=R⁶=R =R¹⁰=H, R⁸=R⁹=R¹¹=CH₃, R₃=CH₃, R₁₂=Et, M=Ni, Y=O, X=Br;
complex Ni10 is the complex represented by Formula III', wherein R¹=R³=iPr, R²=R⁴=R⁵=R⁶=R =R¹⁰=H, R⁸=R⁹=R¹¹=CH₃, R₃=CH₃, R₁₂=Et, M=Ni, Y=O, X=Br;
complex Ni11 is the complex represented by Formula III', wherein R¹=R³=iPr, R²=R⁴=R⁵=R⁶=R =R¹⁰=H, R⁸=R⁹=R¹¹=CH₃, R₃=Et, R₁₂=Et, M=Ni, Y=O, X=Br.

### Example 21

1) Preparation of ligand L9:
   1.5 ml (12 mmol) of 2,6-dimethylaniline was reacted with 57 ml of 1M trimethylaluminum in toluene with refluxing for 3h. Next, camphorquinone (1.05 g, 5 mmol) was added thereto, and the reflux reaction was continued for 8 hours. After cooling, sodium hydroxide/ice water was used to terminate the reaction. The reaction mixture was extracted with ethyl acetate, and the organic phases were combined, dried over anhydrous magnesium sulfate, and separated through a column chromatography with petroleum ether/ethyl acetate as an eluent to afford the ligand L9 as colorless crystals. Yield: 70.2%. ¹HNMR δ (ppm) 7.00-6.89 (m, 6H, Ar-H), 3.57 (s, 1H, NH), 2.18 (s, 6H, C_{Ar}-CH₃), 2.05 (s, 6H, CH₃), 1.74 (m, 4H, CH₂), 1.44 (s, 3H, CH₃), 1.35 (m, 1H), 1.21 (s, 3H, CH₃), 1.01 (s, 3H, CH₃), 0.87 (s, 3H, CH₃).
2) Preparation of complex Ni9: A solution of (DME)NiBr₂ (277 mg, 0.9 mmol) in ethanol (10 mL) was added dropwise to a solution of ligand L9 (233 mg, 0.6 mmol) in dichloromethane (10mL). The reaction was stirred at room temperature for 6h to give precipitates. A filtration was performed, and the filter cake was washed with diethyl ether and dried to afford yellow powdery solids. Yield: 70%. Elemental analysis (calculated for C₅₈H₈₂Br₆N₄Ni₃O₂): C, 45.75; H, 5.43; N, 3.68; experimental value (%): C, 45.56; H, 5.83; N, 3.46.
3) After having been continuously dried at 130°C for 2hrs, a 1L stainless steel polymerization autoclave equipped with mechanical stirring was vacuumed while hot and then filled with N₂ gas 3 times. 450 mL of hexane, 30 mmol (4.7 mL) of methyl 3,3-dimethyl-4-pentenoate, 30 mL of AlEt₃ (1.0 mol/L solution in hexane), and 2.5 mL of MAO (1.53 mol/L solution in toluene) were charged into the polymerization system, and 1.9 mg (1.25 µmol) of complex Ni9 was added simultaneously. The reaction was stirred at 10 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 22

After having been continuously dried at 130°C for 2hrs, a 1L stainless steel polymerization autoclave equipped with mechanical stirring was vacuumed while hot and then filled with N₂ gas 3 times. 450 mL of hexane, 30 mmol (4.7 mL) of methyl 3,3-dimethyl-4-pentenoate, 30 mL of AlEt₃ (1.0 mol/L solution in hexane), 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 10 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 23

After having been continuously dried at 130°C for 2hrs, a 1L stainless steel polymerization autoclave equipped with mechanical stirring was vacuumed while hot and then filled with N₂ gas 3 times. 450 mL of hexane, 30 mmol (4.7 mL) of methyl 3,3-dimethyl-4-pentenoate, 30 mL of AlEt₃ (1.0 mol/L solution in hexane), 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 20 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 24

After having been continuously dried at 130°C for 2hrs, a 1L stainless steel polymerization autoclave equipped with mechanical stirring was vacuumed while hot and then filled with N₂ gas 3 times. 450 mL of hexane, 30 mmol (4.7 mL) of methyl 3,3-dimethyl-4-pentenoate, 30 mL of AlEt₃ (1.0 mol/L solution in hexane), 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3. The density of the obtained polymer was 0.5725 g/cm³. The prepared copolymer was in the form of particles, which were of spherical shape having a particle size of about 2 mm.

### Example 25

After having been continuously dried at 130°C for 2hrs, a 1L stainless steel polymerization autoclave equipped with mechanical stirring was vacuumed while hot and then filled with N₂ gas 3 times. 450 mL of hexane, 30 mmol (4.7 mL) of methyl 3,3-dimethyl-4-pentenoate, 30 mL of AlEt₃ (1.0 mol/L solution in hexane), 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 60 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3. The density of the obtained polymer was 0.3742 g/cm³.

### Example 26

After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (61.4 mmol) of ethyl 2-methyl-4-pentenoate, 15.6 mL (61.4 mmol) of AliBu₃ (95%), 0.5 mL of triisobutylaluminum (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 40 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 27

After having been continuously dried at 130°C for 6hrs, a 1L stainless steel polymerization autoclave equipped with mechanical stirring was vacuumed while hot and then filled with N₂ gas 3 times. 400 mL of hexane, 50 mL (316 mmol) of methyl 3,3-dimethyl-4-pentenoate, and 57.2 mL of diisopropyldichlorosilane were charged into the polymerization system, and the contents were stirred for 2 hours. Next, 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged thereto, and 1.9 mg (1.25 µmol) of complex Ni9 was added simultaneously. The reaction was stirred at 30 °C for 60 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 28

After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (61.4 mmol) of ethyl 2-methyl-4-pentenoate, 31.2 mL (122.8 mmol) of AliBu₃ (95%), 0.5 mL of triisobutylaluminum (1.0 mol/L solution in heptane), 6.4 mg (12.5 µmol) of tris(pentafluorophenyl)borane, and 30.0 mg (37.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 29

After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (57.5 mmol) of isobutyl 2-methyl-3-butenoate, 14.6 mL (57.5 mmol) of AliBu₃ (95%), 0.5 mL of AlMe₃ (1.0 mol/L solution in heptane), 6.4 mg (12.5 µmol) of tris(pentafluorophenyl)borane, and 11.5 mg (12.5 µmol) of triphenylcarbonium tetrakis(pentafluorophenyl)borate were charged into the polymerization system, and 1.9 mg (1.25 µmol) of complex Ni9 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Example 30

1) Preparation of ligand L10:
   To 3.88 g (8 mmol) of α-diimine Compound A2 were successively charged with 30 ml of toluene and 16 ml of 1M trimethylaluminum (16 mmol), and the contents were allowed to react with refluxing for 8 hours. Sodium hydroxide/ice water was used to terminate the reaction. The reaction mixture was extracted with ethyl acetate, and the organic phases were combined, dried over anhydrous magnesium sulfate, and separated through a column chromatography with petroleum ether/ethyl acetate as an eluent to afford ligand L10 as colorless crystals. Yield: 84.2%. ¹HNMR δ (ppm) 7.19-7.06 (m, 6H, Ar-H), 3.42 (s, 1H, NH), 2.98 (m, 2H, CH(CH₃)₂), 2.88 (m, 2H, CH(CH₃)₂), 2.32 (m, 1H), 1.81 (m, 4H, CH₂), 1.50 (s, 3H, CH₃), 1.21 (m, 24H, CH₃), 0.92 (s, 3H, CH₃), 0.75 (s, 3H, CH₃), 0.72 (s, 3H, CH₃).
2) Preparation of complex Ni10: A solution of (DME)NiBr₂ (277 mg, 0.9 mmol) in ethanol (10 mL) was added dropwise to a solution of ligand L10 (300 mg, 0.6 mmol) in dichloromethane (10 mL). The reaction was stirred at room temperature for 6h to give precipitates. A filtration was performed, and the filter cake was washed with diethyl ether and dried to afford red powdery solids. Yield: 78%. Elemental analysis (calculated for C₇₄H₁₁₄Br₆N₄Ni₃O₂): C, 50.87; H, 6.58; N, 3.21; experimental value (%): C, 50.57; H, 6.73; N, 3.04.
3) After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (57.5 mmol) of isobutyl 2-methyl-3-butenoate, 14.6 mL (57.5 mmol) of AliBu₃ (95%), 0.5 mL of AlMe₃ (1.0 mol/L solution in heptane), 6.4 mg (12.5 µmol) of tris(pentafluorophenyl)borane, and 11.5 mg (12.5 µmol) of triphenylcarbonium tetrakis(pentafluorophenyl)borate were charged into the polymerization system, and 2.2 mg (1.25 µmol) of complex Ni10 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3. The density of the obtained polymer was 0.6904 g/cm³.

### Example 31

### Preparation of ligand L11:

To 3.88 g (8 mmol) of α-diimine Compound A2 were successively charged with 30 ml of diethyl ether and 4 ml of 2M diethylzinc (8 mmol), and the contents were stirred at a normal temperature for 3 hours. Ice water was used to terminate the reaction. The reaction mixture was extracted with ethyl acetate, and the organic phases were combined, dried over anhydrous magnesium sulfate, and separated through a column chromatography with petroleum ether/ethyl acetate as an eluent to afford ligand L11 as colorless crystals. Yield: 52.1%. ¹HNMR δ (ppm) 7.17-7.06 (m, 6H, Ar-H), 4.44 (s, 1H, NH), 2.98 (m, 2H, CH(CH₃)₂), 2.87 (m, 2H, CH(CH₃)₂), 2.33 (m, 1H), 1.86 (m, 2H, CH₂), 1.81 (m, 4H, CH₂), 1.21 (m, 24H, CH₃), 1.08 (t, 3H, CH₃), 0.93 (s, 3H, CH₃), 0.75 (s, 3H, CH₃), 0.72 (s, 3H, CH₃).

2) Preparation of complex Ni11: A solution of (DME)NiBr₂ (277 mg, 0.9 mmol) in ethanol (10 mL) was added dropwise to a solution of ligand L11 (309 mg, 0.6 mmol) in dichloromethane (10 mL). The reaction was stirred at room temperature for 6h to give precipitates. A filtration was performed, and the filter cake was washed with diethyl ether and dried to afford red powdery solids. Yield: 72%. Elemental analysis (calculated for C₇₆H₁₁₈Br₆N₄Ni₃O₂): C, 51.42; H, 6.70; N, 3.16; experimental value (%): C, 51.29; H, 6.98; N, 3.04.

3) After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (61.4 mmol) of ethyl 2-methyl-4-pentenoate, 15.6 mL (61.4 mmol) of AliBu₃ (95%), 0.5 mL of AlMe₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 2.2 mg (1.25 µmol) of complex Ni11 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

### Comparative Example 4

After having been continuously dried at 130°C for 6hrs, a 1L stainless steel polymerization autoclave equipped with mechanical stirring was vacuumed while hot and then filled with N₂ gas 3 times. 450 mL of hexane, 10.0 mL (71 mmol) of methyl 5-hexenoate, 11.4 mL of AliBu₃ (95%), 0.50 mL of AlEt₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, and 1.9 mg (1.25 µmol) of complex Ni9 was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 3.

**Table 3**

| No. | Complex | Polymerization Activity 10⁶g·mol⁻¹ (Ni)·h⁻¹ | Mw (×10⁴) | PDI | Content of structural units derived from the unsaturated carboxylic ester represented by formula G, mol% | Is there a spherical or sphere-like polymer in the copolymer?/Particle size (mm) |
|---|---|---|---|---|---|---|
| Example 21 | Ni9 | 1.36 | 29.20 | 2.32 | 0.42 | Yes/2.2 |
| Example 22 | Ni9 | 4.67 | 5.78 | 2.12 | 0.43 | Yes/1.1 |
| Example 23 | Ni9 | 3.54 | 7.04 | 2.13 | 0.42 | Yes/1.7 |
| Example 24 | Ni9 | 2.73 | 8.62 | 2.14 | 0.43 | Yes/2.0 |
| Example 25 | Ni9 | 2.12 | 9.36 | 2.16 | 0.41 | Yes/5.0 |
| Example 26 | Ni9 | 2.42 | 6.41 | 2.23 | 0.56 | Yes/1.8 |
| Example 27 | Ni9 | 1.83 | 9.34 | 2.24 | 1.13 | Yes/3.2 |
| Example 28 | Ni9 | 1.96 | 7.37 | 2.25 | 0.52 | Yes/2.1 |
| Example 29 | Ni9 | 2.54 | 7.12 | 2.37 | 0.51 | Yes/2.2 |
| Example 30 | Ni10 | 4.27 | 19.42 | 2.71 | 0.50 | Yes/2.3 |
| Example 31 | Ni11 | 4.66 | 17.31 | 2.26 | 0.50 | Yes/2.5 |
| Comp. Ex. 4 | Ni9 | 1.04 | 5.23 | 2.31 | 0.30 | No |

It can be seen from Table 3 that when the catalysts of the invention catalyze the copolymerization of ethylene with an unsaturated carboxylic ester, they exhibit higher polymerization activities. The copolymerization activities of the catalysts of the invention can be up to 4.66×10⁶g·mol⁻¹(Ni)·h⁻¹. In addition, by adjusting polymerization conditions, copolymer products with good particle morphology can be obtained.

Ligands L12-L16 involved in the following Examples 32- can be synthesized by referring to literature: Organometallics 2011, 30, 5480-5486.

### Example 32

### Preparation of complex Ni12

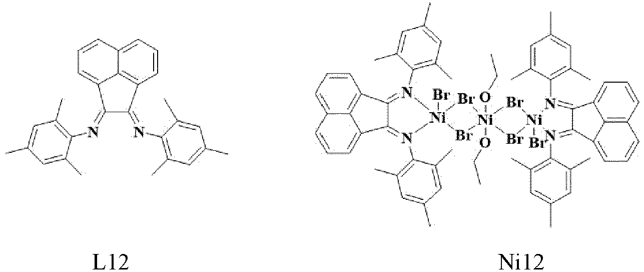

A solution of 0.277 g (0.9 mmol) of (DME)NiBr₂ in ethanol (10 mL) was added slowly dropwise to a solution of 0.249 g (0.6 mmol) of ligand L12 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni12 as brownish-red powdery solids. Yield: 84.3 %. Elemental analysis (calculated for C₆₄H₆₆Br₆N₄Ni₃O₂): C, 48.69; H, 4.21; N, 3.55; experimental value (%): C, 48.54; H, 4.47; N, 3.21.

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 47 µL (0.30 mmol) of methyl 3,3-dimethyl-4-pentenoate, 0.30 mL of AlEt₃ (1.0mol/L solution in hexane), 50 µL of AlMe₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, and 12.5 µL of complex Ni12 (1.0 mmol/L solution in toluene) was added simultaneously. The reaction was stirred at 30 °C for 10 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 1. The content of the unsaturated carboxylic ester in the polymer as measured by NMR analysis was 0.74 mol%.

### Example 33

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 47 µL (0.30 mmol) of methyl 3,3-dimethyl-4-pentenoate, 0.30 mL of AlEt₃ (1.0mol/L solution in hexane), and 25 µL of MAO (1.53 mol/L solution in toluene) were charged into the polymerization system, followed by the addition of 12.5 µL of complex Ni12 (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.75 mol%.

### Example 34

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (95%, 0.61 mmol), 50 µL of triisobutylaluminum (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, followed by the addition of 12.5 µL of complex Ni12 (1.0 mmol/L solution in toluene). The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.93 mol%.

### Example 35

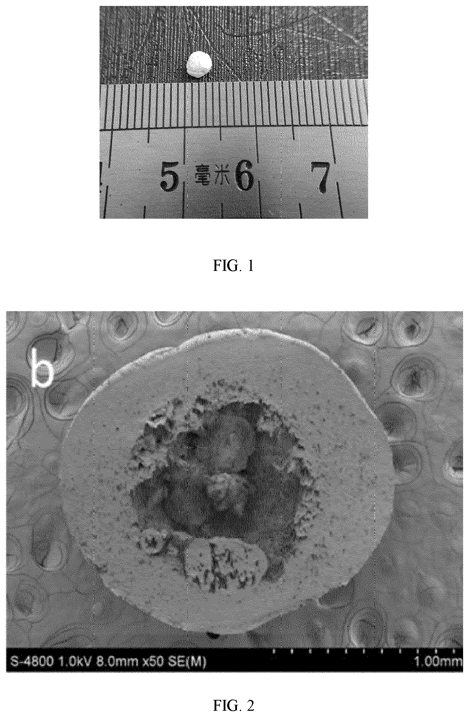

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (95%, 0.61 mmol), 50 µL of triisobutylaluminum (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, followed by the addition of 37.5 µL of complex Ni12 (1.0 mmol/L solution in toluene). The reaction was stirred at 10 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.90 mol%. Electron micrograph of the polymer is shown in Figure 2.

### Example 36

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.50 mL (3.16 mmol) of methyl 3,3-dimethyl-4-pentenoate, and 0.57 mL of diisopropyldichlorosilane were charged into the polymerization system, and the contents were stirred for 2 hours. Next, 50 µL of AlMe₃ (0.1 mol/L solution in heptane), 25.0 µL of tris(pentafluorophenyl)borane (0.01 mol/L solution in toluene), 37.5 µL of N,N-dimethylanilinium tetrakis(pentafluorophenyl)borate (0.01 mol/L solution in toluene), and 12.5 µL of complex Ni12 (1.0 mmol/L solution in toluene) were added thereto. The reaction was stirred at 30 °C for 60 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 1.72mol%.

### Example 37

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (95%, 0.61 mmol), 50 µL of AlMe₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, and 12.5 µL of complex Ni12 (1.0 mmol/L solution in toluene) was added simultaneously. The reaction was stirred at 50 °C for 20 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.64 mol%.

### Example 38

After having been continuously dried at 130°C for 2hrs, a 1L stainless steel polymerization autoclave equipped with mechanical stirring was vacuumed while hot and then filled with N₂ gas 3 times. 450 mL of hexane, 10.0 mL (57.5 mmol) of isobutyl 2-methyl-3-butenoate, 14.6 mL of AliBu₃ (95%, 57.5 mmol), 0.5 mL of AlMe₃ (1.0 mol/L solution in heptane), 6.4 mg (12.5 µmol) of tris(pentafluorophenyl)borane, and 11.5 mg (12.5 µmol) of triphenylcarbonium tetrakis(pentafluorophenyl)borate were charged into the polymerization system, and 2.0 mg (1.25 µmol) of complex Ni12 was added simultaneously. The reaction was stirred at 30 °C for 60 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.94 mol%. The density of the obtained polymer was 0.4014 g/cm³.

### Example 39

### Preparation of complex Ni2

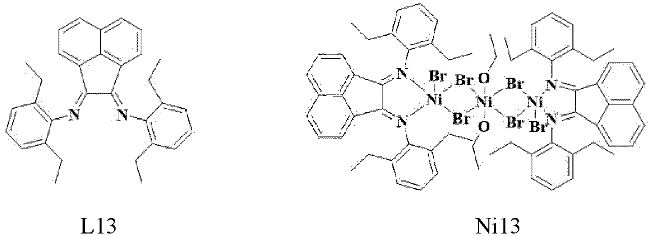

A solution of 0.277 g (0.9 mmol) of (DME)NiBr₂ in ethanol (10 mL) was added slowly dropwise to a solution of 0.267 g (0.6 mmol) of ligand L13 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni13 as brownish-red powdery solids. Yield: 74.0 %. Elemental analysis (calculated for C₆₈H₇₄Br₆N₄Ni₃O₂): C, 49.96; H, 4.56; N, 3.43; experimental value (%): C, 49.54; H, 5.11; N, 3.20.

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.61 mmol) of ethyl 2-methyl-4-pentenoate, 156 µL of AliBu₃ (95%, 0.61 mmol), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, and 12.5 µL of complex Ni13 (1.0 mmol/L solution in toluene) was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.70 mol%.

### Example 40

### Preparation of complex Ni14

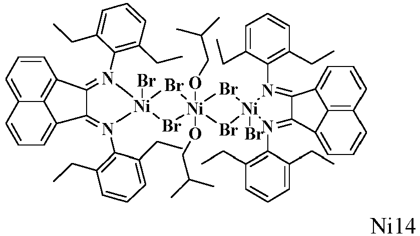

A solution of 0.277 g (0.9 mmol) of (DME)NiBrz in 2-methyl-1-propanol (10 mL) was added slowly dropwise to a solution of 0.267 g (0.6 mmol) of ligand L13 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni14 as brownish-red powdery solids. Yield: 74.0 %. Elemental analysis (calculated for C₇₂H₈₂Br₆N₄Ni₃O₂): C, 51.14; H, 4.89; N, 3.31; experimental value (%): C, 51.22; H, 5.21; N, 3.20.

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.58 mmol) of isobutyl 2-methyl-3-butenoate, 146 µL of AliBu₃ (95%, 0.58 mmol), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged into the polymerization system, and 12.5 µL of complex Ni14 (1.0 mmol/L solution in toluene) was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.71 mol%.

### Example 41

### Preparation of complex Ni15

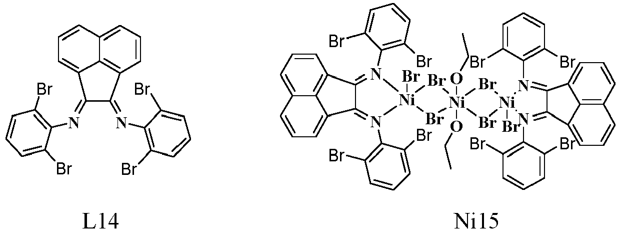

A solution of 0.277 g (0.9 mmol) of (DME)NiBr₂ in ethanol (10 mL) was added slowly dropwise to a solution of 0.389 g (0.6 mmol) of ligand L14 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni15 as brownish-red powdery solids. Yield: 74.1 %. Elemental analysis (calculated for C₅₂H₃₄Br₁₄N₄Ni₃O₂): C, 30.59; H, 1.68; N, 2.74; experimental value (%): C, 30.72; H, 1.97; N, 2.48.

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.10 mL (0.70 mmol) of ethyl 2-methyl-3-butenoate, 178 µL of AliBu₃ (95%, 0.70 mmol), 50 µL of AlMe₃ (0.1 mol/L solution in heptane), 12.5 µL of tris(pentafluorophenyl)borane (0.01 mol/L solution in toluene), and 12.5 µL of triphenylcarbonium tetrakis(pentafluorophenyl)borate (0.01 mol/L solution in toluene) were charged thereto, followed by the addition of 12.5 µL of complex Ni15 (1.0 mmol/L solution in toluene). The reaction was stirred at 30 °C for 30 minutes, with ethylene pressure being maintained at 10 atm. The reaction mixture was neutralized with an ethanol solution acidified with 10 wt% hydrochloric acid to obtain a polymer. The results are shown in Table 4. The content of the unsaturated carboxylic ester in the polymer as measured by NMR analysis was 1.03 mol%.

### Example 42

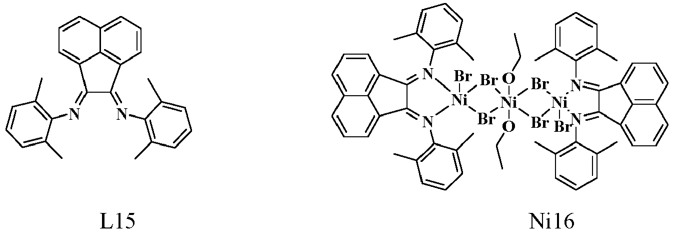

### Preparation of complex Ni16

A solution of 0.277 g (0.9 mmol) of (DME)NiBr₂ in ethanol (10 mL) was added slowly dropwise to a solution of 0.233 g (0.6 mmol) of ligand L15 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni16 as brownish-red powdery solids. Yield: 78.2 %. Elemental analysis (calculated for C₆₀H₅₈Br₆N₄Ni₃O₂): C, 47.33; H, 3.84; N, 3.68; experimental value (%): C, 47.38; H, 4.00; N, 3.46.

After having been continuously dried at 130°C for 2hrs, a 1L stainless steel polymerization autoclave equipped with mechanical stirring was vacuumed while hot and then filled with N₂ gas 3 times. 450 mL of hexane, 10 mL (57.5 mmol) of methyl 2-isopropyl-4-pentenoate, 14.6 mL of AliBu₃ (95%, 57.5 mmol), 0.50 mL of AlEt₃ (1.0 mol/L solution in heptane), 6.4 mg (12.5 µmol) of tris(pentafluorophenyl)borane, and 10.0 mg (12.5 µmol) of N,N-dimethylanilinium tetrakis(pentafluorophenyl)borate were charged into the polymerization system, followed by the addition of 1.9 mg (1.25 µmol) of complex Ni16. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.94 mol%. The density of the obtained polymer was 0.6921 g/cm³.

### Example 43

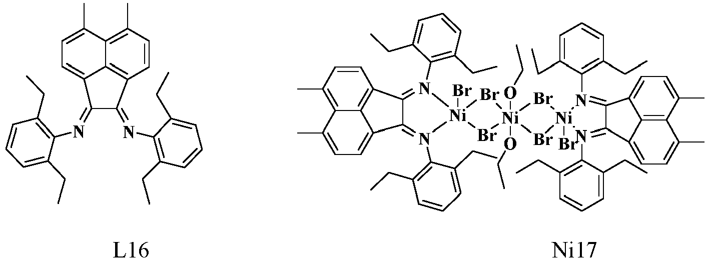

A solution of 0.277 g (0.9 mmol) of (DME)NiBr₂ in ethanol (10 mL) was added slowly dropwise to a solution of 0.284 g (0.6 mmol) of ligand L16 in dichloromethane (10 mL). The color of the solution immediately changed to deep red, and a large quantity of precipitants was formed. The reaction was stirred at room temperature for 6h, and then anhydrous diethyl ether was added to perform precipitation. A filtration was performed to afford a filter cake, and the filter cake was washed with anhydrous diethyl ether and dried in vacuum to afford Ni17 as brownish-red powdery solids. Yield: 75.2 %. Elemental analysis (calculated for C₇₂H₈₂Br₆N₄Ni₃O₂): C, 51.14; H, 4.89; N, 3.31; experimental value (%): C, 50.82; H, 5.12; N, 3.07.

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 0.61 mmol (100 µL) of ethyl 2-methyl-4-pentenoate, 156 µL of AliBu₃ (95%, 0.61 mmol), 50 µL of AlEt₃ (0.1 mol/L solution in heptane), 12.5 µL of tris(pentafluorophenyl)borane (0.01 mol/L solution in toluene), 12.5 µL of N,N-dimethylanilinium tetrakis(pentafluorophenyl)borate (0.01 mol/L solution in toluene), and 12.5 µL of complex Ni17 (1.0 mmol/L solution in toluene) were charged thereto. The reaction was vigorously stirred at 30 °C for 30 minutes, with ethylene pressure being maintained at 10 atm. The reaction mixture was neutralized with an ethanol solution acidified with 10 wt% hydrochloric acid to obtain a polymer. The results are shown in Table 4. The content of the unsaturated carboxylic ester in the polymer as measured by NMR analysis was 0.96 mol%.

### Comparative Example 5

After having been continuously dried at 130°C for 2hrs, a 7 mL stainless steel glass-lined polymerization autoclave equipped with mechanical stirring was vacuumed while hot and then filled with N₂ gas 3 times. 4.0 mL of heptane, 100 µL (0.71 mmol) of methyl 5-hexenoate, 114 µL of AliBu₃ (95%, 0.44mmol), 50 µL of AlEt₃ (0.1 mol/L solution in heptane), 12.5 µL of tris(pentafluorophenyl)borane (0.01 mol/L solution in toluene), and 12.5 µL of N,N-dimethylanilinium tetrakis(pentafluorophenyl)borate (0.01 mol/L solution in toluene) were charged into the polymerization system, followed by the addition of 12.5 µL of complex Ni12 (1.0 mmol/L solution in toluene) was added simultaneously. The reaction was stirred at 30 °C for 30 minutes, with ethylene pressure being maintained at 10 atm. Finally, the reaction mixture was neutralized with an ethanol solution acidified with 10 wt% hydrochloric acid to obtain a polymer. The polymerization activity and the performance parameters of the polymer are shown in Table 4. The content of the unsaturated carboxylic ester in the polymer as measured by NMR analysis was 0.76 mol%.

### Comparative Example 6

10 atm Ethylene Polymerization: After having been continuously dried at 130°C for 2hrs, a 1L stainless steel polymerization autoclave equipped with mechanical stirring was vacuumed while hot and then filled with N₂ gas 3 times. 450 ml of hexane, 10.0 mL (44.5 mmol) of methyl 10-undecenoate, 11.4 mL of AliBu₃ (95%), and 2.8 mL of MAO (1.53 mol/L solution in toluene) were charged thereto, and 2.3 mg (3.75 µmol) of comparative catalyst A (having a structure represented by Formula 1 below) was added simultaneously. The reaction was vigorously stirred at 30 °C for 30 minutes, with ethylene pressure being maintained at 10 atm. The reaction mixture was neutralized with an ethanol solution acidified with 10 wt% hydrochloric acid to obtain a polymer. The results are shown in Table 42. The content of the unsaturated carboxylic ester in the polymer as measured by NMR analysis was 0.77 mol%.

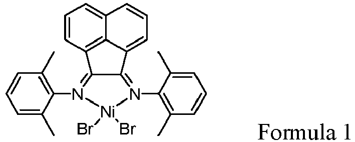

**Table 4**

| No. | Complex | Polymerization Activity 10⁶g·mol⁻¹(Ni)·h⁻¹ | Mw (×10⁴) | PDI | Is there a spherical or sphere-like polymer in the copolymer?/Particle size (mm) |
|---|---|---|---|---|---|
| Example 32 | Ni12 | 10.99 | 7.82 | 3.72 | Yes/0.62 |
| Example 33 | Ni12 | 5.27 | 12.72 | 4.03 | Yes/0.83 |
| Example 34 | Ni12 | 7.27 | 14.18 | 3.95 | Yes/0.74 |
| Example 35 | Ni12 | 3.62 | 32.28 | 3.23 | Yes/1.82 |
| Example 36 | Ni12 | 4.82 | 14.02 | 3.62 | Yes/1.24 |
| Example 37 | Ni12 | 4.24 | 5.13 | 3.26 | Yes/0.92 |
| Example 38 | Ni12 | 4.82 | 15.33 | 4.14 | Yes/4.32 |
| Example 39 | Ni13 | 11.20 | 33.71 | 3.43 | Yes/0.98 |
| Example 40 | Ni14 | 12.71 | 31.21 | 3.14 | Yes/0.96 |
| Example 41 | Ni15 | 10.72 | 11.22 | 3.27 | Yes/0.80 |
| Example 42 | Ni16 | 5.02 | 10.31 | 3.74 | Yes!2.32 |
| Example 43 | Ni17 | 9.28 | 32.44 | 3.27 | Yes/1.89 |
| Comp. Ex. 5 | Ni12 | 3.17 | 10.72 | 4.03 | No |
| Comp. Ex. 6 | A | 2.12 | 16.72 | 3.43 | No |

It can be seen from Table 4 that when the catalysts of the invention catalyze the copolymerization of ethylene with an unsaturated carboxylic ester, they exhibit higher polymerization activities. The copolymerization activities of the catalyst systems of the invention are higher than those of comparative examples and can be up to 12.7×10⁶g·mol⁻¹(Ni)·h⁻¹. In addition, by adjusting polymerization conditions, copolymer products with good particle morphology can be obtained. Spherical and/or sphere-like polymers with good shape are directly prepared without subsequent processing steps such as granulation, and the resultant polymer products are not prone to fouling in the reactor and are convenient for transportation.

## Claims

1. A method for preparing a polymer, comprising polymerizing an olefin and an unsaturated carboxylic ester in the presence of a catalyst to form an olefin-unsaturated carboxylic ester polymer,
wherein the catalyst comprises a main catalyst and optionally a cocatalyst,
the main catalyst being at least one selected from the group consisting of:
the diimine-metal complexes represented by formula I: 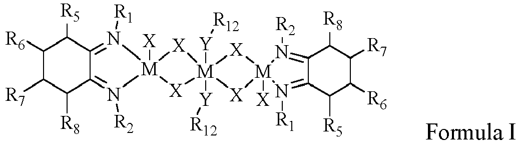 wherein, R₁ and R₂ are each independently a C1-C30 hydrocarbyl with or without a substituent; R₅-R₈ are each independently selected from the group consisting of hydrogen, halogen, hydroxy, and C1-C20 hydrocarbyl with or without a substituent, and two or more of R₅-R₈ groups are optionally joined to form a ring; each R₁₂ is independently a C1-C20 hydrocarbyl with or without a substituent; each Y is independently a Group VIA nonmetal atom; each M is independently a Group VIII metal; and each X is independently selected from the group consisting of halogen, C1-C10 hydrocarbyl with or without a substituent and C1-C10 hydrocarbyloxy with or without a substituent,
the aminoimine-metal complexes represented by formula I': 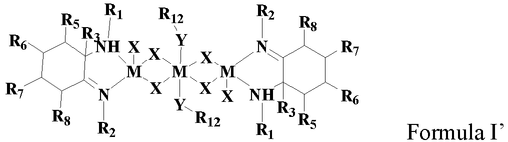 wherein, R₁ and R₂ are each independently a C1-C30 hydrocarbyl with or without a substituent; each R₃ is independently selected from the group consisting of hydrogen and C1-C20 hydrocarbyl with or without a substituent; R₅-R₈ are each independently selected from the group consisting of hydrogen, halogen, hydroxy, and C1-C20 hydrocarbyl with or without a substituent, and two or more of Rs-Rs groups are optionally joined to form a ring; each R₁₂ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent, and
the diimine-metal complexes represented by formula I": 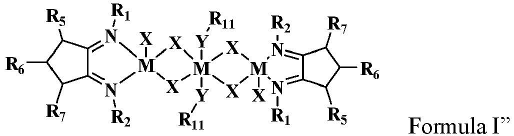 wherein, R₁ and R₂ are each independently a C1-C30 hydrocarbyl with or without a substituent; R₅-R₇ are each independently selected from the group consisting of hydrogen, halogen, hydroxy, and C1-C20 hydrocarbyl with or without a substituent, and two or more of R₅-R₇ groups are optionally joined to form a ring; each R₁₁ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

2. The method as claimed in claim 1, having at least one of the following features:
- R₁ and R₂ are independently selected from the group consisting of C1-C20 alkyl with or without a substituent and C6-C20 aryl with or without a substituent, and preferably R₁ and/or R₂ are/is a group represented by formula A: 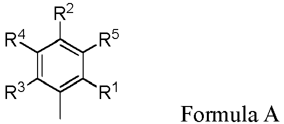 wherein, R¹-R⁵ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent, and two or more of R¹-R⁵ groups are optionally joined to form a ring;
preferably, wherein R¹-R⁵ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
- each M is independently selected from the group consisting of nickel and palladium;
- each Y is independently selected from the group consisting of O and S;
- each X is independently selected from the group consisting of halogen, C1-C10 alkyl with or without a substituent and C1-C10 alkoxy with or without a substituent, and preferably from the group consisting of halogen, C1-C6 alkyl with or without a substituent and C1-C6 alkoxy with or without a substituent;
- each R₁₁ is independently a C1-C20 alkyl with or without a substituent, preferably a C1-C10 alkyl with or without a substituent, and more preferably a C1-C6 alkyl with or without a substituent;
- each R₁₂ is independently a C1-C20 alkyl with or without a substituent, preferably a C1-C10 alkyl with or without a substituent, and more preferably a C1-C6 alkyl with or without a substituent;
- each R₃ is independently selected from the group consisting of C1-C20 alkyl with or without a substituent, C6-C20 aryl with or without a substituent, C7-C20 aralkyl with or without a substituent and C7-C20 alkaryl with or without a substituent; preferably, each R₃ is independently selected from the group consisting of C1-C10 alkyl with or without a substituent, C6-C10 aryl with or without a substituent, C7-C15 aralkyl with or without a substituent and C7-C15 alkaryl with or without a substituent; and more preferably, each R₃ is a C1-C6 alkyl with or without a substituent, preferably methyl, ethyl, propyl or butyl.

3. The method as claimed in claim 1, **characterized in that** the main catalyst comprises at least one complex selected from the group consisting of:
the diimine-metal complexes represented by a formula III: 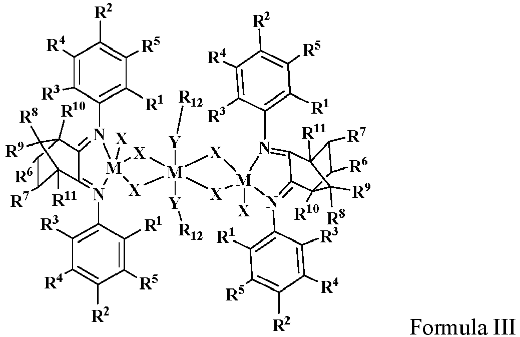 wherein, R¹-R⁵ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent; and M, X, Y and R₁₂ are as defined for the Formula I,
the aminoimine-metal complexes represented by a formula III': 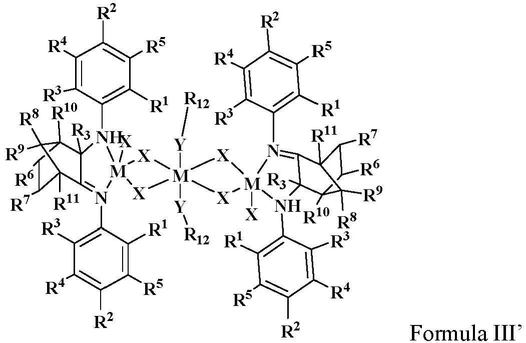 wherein, R¹-R⁵ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent; and R³, R₁₂, Y, M and X are as defined for the Formula I',
and the diimine-metal complexes represented by a formula III": 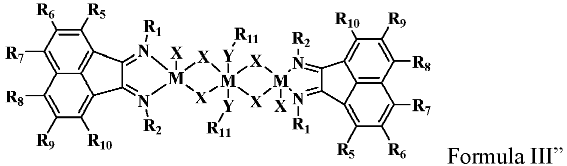 wherein, R₅-R₁₀ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent; and R¹, R², M, X, Y and R₁₁ are as defined for the Formula I".

4. The method as claimed in claim 3, **characterized in that**
in the formula III or III', R¹-R¹¹ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
preferably, R¹-R¹¹ are each independently selected from the group consisting of hydrogen, C1-C10 alkyl, halogenated C1-C10 alkyl, C1-C10 alkoxy, halogenated C1-C10 alkoxy and halogen, and more preferably from the group consisting of hydrogen, C1-C6 alkyl, halogenated C1-C6 alkyl, C1-C6 alkoxy, halogenated C1-C6 alkoxy and halogen, and
in the formula III", R₅-R₁₀ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
preferably, R₅-R₁₀ are each independently selected from the group consisting of hydrogen, C1-C10 alkyl, halogenated C1-C10 alkyl, C1-C10 alkoxy, halogenated C1-C10 alkoxy, and halogen; and more preferably from the group consisting of hydrogen, C1-C6 alkyl, halogenated C1-C6 alkyl, C1-C6 alkoxy, halogenated C1-C6 alkoxy, and halogen.

5. The method as claimed in claim 1, **characterized in that** the main catalyst comprises at least one diimine-metal complex represented by a formula III‴: 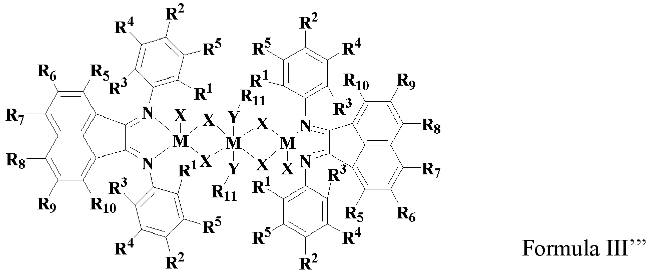 wherein, R¹-R⁵ are independently selected from the group consisting of hydrogen, halogen, C1-C6 alkyl with or without a substituent and C1-C6 alkoxy with or without a substituent; R₅-R₁₀ are independently selected from the group consisting of hydrogen, halogen, C1-C6 alkyl and C1-C6 alkoxy; each M is nickel; each Y is O; each X is independently a halogen; and each R₁₁ is independently a C1-C6 alkyl with or without a substituent.

6. The method as claimed in any one of claims 1 to 5, **characterized in that** the substituent is selected from the group consisting of halogen, hydroxy, C1-C10 alkyl, halogenated C1-C10 alkyl, C1-C10 alkoxy and halogenated C1-C10 alkoxy, and preferably from the group consisting of halogen, hydroxy, C1-C6 alkyl, halogenated C1-C6 alkyl, C1-C6 alkoxy and halogenated C1-C6 alkoxy;
preferably, the C1-C6 alkyl is selected from the group consisting of methyl, ethyl, n-propyl, isopropyl, n-butyl, isobutyl, n-pentyl, isopentyl, n-hexyl, isohexyl and 3,3-dimethylbutyl;
preferably, the C1-C6 alkoxy is selected from the group consisting of methoxy, ethoxy, n-propoxy, isopropoxy, n-butoxy, isobutoxy, n-pentoxy, isopentoxy, n-hexoxy, isohexoxy and 3,3-dimethylbutoxy;
preferably, the halogen is selected from the group consisting of fluorine, chlorine, bromine and iodine.

7. The method as claimed in claim 3, **characterized in that** the main catalyst comprises at least one complex selected from the group consisting of:
the diimine-metal complex represented by the formula III, wherein R¹=R³=methyl, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=ethyl, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=isopropyl, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹-R³=methyl, R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=methyl, R²=Br, R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=F, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=Cl, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=Br, R²=R⁴-R⁷=R¹⁰=H, R⁸=R⁹=R¹¹=methyl, R₁₂=ethyl, M=Ni, Y=O, X=Br;
the diimine-metal complex represented by the formula III, wherein R¹=R³=methyl, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=ethyl, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=isopropyl, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹-R³=methyl, R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=methyl, R²=Br, R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=F, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=Cl, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=Br, R²=R⁴-R⁷=R¹⁰=H, R⁸=R⁹=R¹¹=methyl, R₁₂=isobutyl, M=Ni, Y=O, X=Br;
the diimine-metal complex represented by the formula III, wherein R¹=R³=methyl, R²=R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=ethyl, R²=R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=isopropyl, R²=R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹-R³=methyl, R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=methyl, R²=Br, R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=F, R²=R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=Cl, R²=R⁴-R⁷=R¹⁰=H, R⁸=R⁹=methyl, R¹¹=bromomethyl, R₁₂=ethyl, M=Ni, Y=O, X=Br;
the diimine-metal complex represented by the formula III, wherein R¹=R³=Br, R²=R⁴-R⁷=R¹⁰=H, R⁸=R⁹=methyl, R¹¹=bromomethyl, R₁₂=ethyl, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=Me, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=Et, R₁₂=Me, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=iPr, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=Et, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Me, R²=R⁴=R⁵=R⁶=R⁷=R¹⁰=H, R⁸=R⁹=R¹¹=CH₃, R₃=CH₃, R₁₂=i-Pr, M=Ni, Y=O, X=Br;
the complex represented by the formula III', wherein R¹-R³=Me, R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹-R³=Me, R⁴-R⁷=R¹⁰=H, R⁸=R⁹=R¹¹=CH₃, R₃=CH₃, R₁₂=Et, M=Ni, Y=O, X=Br;
the complex represented by the formula III', wherein R¹=R³=methyl, R²=Br, R⁴-R⁷=R¹⁰=H, R⁸=R⁹=Rⁿ=R₃=CH₃, R₁₂=Et, M=Ni, Y=O, X=Br;
the complex represented by the formula III', wherein R¹=R³=methyl, R²=Br, R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=F, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Cl, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=Br, R²=R⁴-R⁷=R¹⁰=H, R⁸=R⁹=R¹¹=CH₃, R₃=Et, R₁₂=Et, M=Ni, Y=O, X=Br;
the complex represented by the formula III', wherein R¹=R³=methyl, R²=R⁴-R⁷=R¹⁰=H, R⁸=R⁹=R¹¹=CH₃, R₃=Et, R₁₂=isobutyl, M=Ni, Y=O, X=Br;
the complex represented by the formula III', wherein R¹=R³=ethyl, R²=R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹=R³=isopropyl, R²=R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹-R³=methyl, R⁴-R⁷=R¹⁰=H, R⁸=R⁹=R¹¹=CH₃, R₃=CH₃, R₁₂=isobutyl, M=Ni, Y=O, X=Br;
the complex represented by the formula III', wherein R¹=R³=methyl, R²=Br, R⁴-R⁷=R¹⁰=H, R⁸=R⁹=R¹¹=methyl, R₃=isopropyl, R₁₂=isobutyl, M=Ni, Y=O, X=Br;
the complex represented by the formula III', wherein R¹=R³=F, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=Cl, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=Br, R²=R⁴-R⁷=R¹⁰=H, R⁸=R⁹=R¹¹=CH₃, R₃=isopropyl, R₁₂=isobutyl, M=Ni, Y=O, X=Br;
the complex represented by the formula III', wherein R¹=R³=methyl, R²=R⁴-R⁷=R¹⁰=H, R⁸=R⁹=CH₃, R¹¹=bromomethyl, R₃=isopropyl, R₁₂=ethyl, M=Ni, Y=O, X=Br;
the complex represented by the formula III', wherein R¹=R³=Et, R²=R⁴-R⁷=R¹⁰=H, R⁸=R⁹=CH₃, R¹¹=CH₂Br, R₃=isopropyl, R₁₂=ethyl, M=Ni, Y=O, X=Br;
the complex represented by the formula III', wherein R¹=R³=isopropyl, R²=R⁴-R⁷=R¹⁰=H, R⁸=R⁹=CH₃, R¹¹=CH₂Br, R₃=ethyl, R₁₂=Et, M=Ni, Y=O, X=Br;
the complex represented by the formula III', wherein R¹-R³=Me, R⁴-R⁷=R¹⁰=H, R⁸=R⁹=CH₃, R¹¹=CH₂Br, R₁₂=ethyl, M=Ni, Y=O, X=Br;
the complex represented by the formula III', wherein R¹=R³=Me, R²=Br, R⁴-R⁷=R¹⁰=H, R⁸=R⁹=Me, R₃=Et, R¹¹=CH₂Br, R₁₂=Et, M=Ni, Y=O, X=Br;
the complex represented by the formula III', wherein R¹=R³=F, R²=R⁴-R⁷=R¹⁰=H, R⁸=R⁹=Me, R¹¹=CH₂Br, R₃=isobutyl, R₁₂=Et, M=Ni, Y=O, X=Br;
the complex represented by the formula III', wherein R¹=R³=CL, R²=R⁴-R⁷=R¹⁰=H, R⁸=R⁹=Me, R¹¹=CH₂Br, R₃=isobutyl, R₁₂=Et, M=Ni, Y=O, X=Br; and
the complex represented by the formula III', wherein R¹=R³=Br, R²=R⁴-R⁷=R¹⁰=H, R⁸=R⁹=Me, R¹¹=CH₂Br, R₃=isobutyl, R₁₂=Et, M=Ni, Y=O, X=Br.

8. The method as claimed in claim 5, **characterized in that** the main catalyst comprises at least one complex selected from the group consisting of:
the complex represented by the formula III''', wherein R¹=R³=isopropyl, R²=R⁴=R⁵=R₅-R₁₀=H, R₁₁=Me, M=Ni, Y=O, X=Br;
the complex represented by the formula III"', wherein R¹=R³=Et, R²=R⁴=R⁵=R₅-R₁₀=H, R₁₁=Me, M=Ni, Y=O, X=Br;
the complex represented by the formula III''', wherein R¹=R³=Me, R²=R⁴=R⁵=R₅-R₁₀=H, R₁₁=Me, M=Ni, Y=O, X=Br;
the complex represented by the formula III''', wherein R¹-R³=Me, R⁴=R⁵=R₅-R₁₀=H, R₁₁=Me, M=Ni, Y=O, X=Br;
the complex represented by the formula III''', wherein R¹=R³=Me, R²=Br, R⁴=R⁵=R₅-R₁₀=H, R₁₁=Me, M=Ni, Y=O, X=Br;
the complex represented by the formula III''', wherein R¹=R³=Br, R²=R⁴=R⁵=R₅-R₁₀=H, R₁₁=Me, M=Ni, Y=O, X=Br;
the complex represented by the formula III''', wherein R¹=R³=Cl, R²=R⁴=R⁵=R₅-R₁₀=H, R₁₁=Me, M=Ni, Y=O, X=Br;
the complex represented by the formula III''', wherein R¹=R³=F, R²=R⁴=R⁵=R₅-R₁₀=H, R₁₁=Me, M=Ni, Y=O, X=Br;
the complex represented by the formula III''', wherein R¹=R³=isopropyl, R²=R⁴=R⁵=R₅-R₁₀=H, R₁₁=Et, M=Ni, Y=O, X=Br;
the complex represented by the formula III‴, wherein R¹=R³=Et, R²=R⁴=R⁵=R₅-R₁₀=H, R₁₁=Et, M=Ni, Y=O, X=Br;
the complex represented by the formula III‴, wherein R¹=R³=Me, R²=R⁴=R⁵=R₅-R₁₀=H, R₁₁=Et, M=Ni, Y=O, X=Br;
the complex represented by the formula III‴, wherein R¹-R³=Me, R⁴=R⁵=R₅-R₁₀=H, R₁₁=Et, M=Ni, Y=O, X=Br;
the complex represented by the formula III‴, wherein R¹=R³=Me, R²=Br, R⁴=R⁵=R₅-R₁₀=H, R₁₁=Et, M=Ni, Y=O, X=Br;
the complex represented by the formula III''', wherein R¹=R³=Br, R²=R⁴=R⁵=R₅-R₁₀=H, R₁₁=Et, M=Ni, Y=O, X=Br;
the complex represented by the formula III''', wherein R¹=R³=Cl, R²=R⁴=R⁵=R₅-R₁₀=H, R₁₁=Et, M=Ni, Y=O, X=Br;
the complex represented by the formula III''', wherein R¹=R³=F, R²=R⁴=R⁵=R₅-R₁₀=H, R₁₁=Et, M=Ni, Y=O, X=Br;
the complex represented by the formula III''', wherein R¹=R³=isopropyl, R²=R⁴=R⁵=R₅-R₁₀=H, R₁₁=isobutyl, M=Ni, Y=O, X=Br;
the complex represented by the formula III''', wherein R¹=R³=Et, R²=R⁴=R⁵=R₅-R₁₀=H, R₁₁=isobutyl, M=Ni, Y=O, X=Br;
the complex represented by the formula III''', wherein R¹=R³=Me, R²=R⁴=R⁵=R₅-R₁₀=H, R₁₁=isobutyl, M=Ni, Y=O, X=Br;
the complex represented by the formula III''', wherein R¹-R³=Me, R⁴=R⁵=R₅-R₁₀=H, R₁₁=isobutyl, M=Ni, Y=O, X=Br;
the complex represented by the formula III''', wherein R¹=R³=Me, R²=Br, R⁴=R⁵=R₅-R₁₀=H, R₁₁=isobutyl, M=Ni, Y=O, X=Br;
the complex represented by the formula III‴, wherein R¹=R³=Br, R²=R⁴=R⁵=R₅-R₁₀=H, R₁₁=isobutyl, M=Ni, Y=O, X=Br;
the complex represented by the formula III''', wherein R¹=R³=Cl, R²=R⁴=R⁵=R₅-R₁₀=H, R₁₁=isobutyl, M=Ni, Y=O, X=Br;
the complex represented by the formula III‴, wherein R¹=R³=F, R²=R⁴=R⁵=R₅-R₁₀=H, R₁₁=isobutyl, M=Ni, Y=O, X=Br;
the complex represented by the formula III‴, wherein R¹=R³=isopropyl, R²=R⁴=R⁵=R₅=R₆=R₉=R₁₀=H, R₇=R₈=Me, R₁₁=Et, M=Ni, Y=O, X=Br;
the complex represented by the formula III‴, wherein R¹=R³=Et, R²=R⁴=R⁵=R₅=R₆=R₉=R₁₀=H, R₇=R₈=Me, R₁₁=Et, M=Ni, Y=O, X=Br;
the complex represented by the formula III‴, wherein R¹=R³=Me, R²=R⁴=R⁵=R₅=R₆=R₉=R₁₀=H, R₇=R₈=Me, R₁₁=Et, M=Ni, Y=O, X=Br;
the complex represented by the formula III‴, wherein R¹-R³=Me, R⁴=R⁵=R₅=R₆=R₉=R₁₀=H, R₇=R₈=Me, R₁₁=Et, M=Ni, Y=O, X=Br;
the complex represented by the formula III‴, wherein R¹=R³=Me, R²=Br, R⁴=R⁵=R₅=R₆=R₉=R₁₀=H, R₇=R₈=Me, R₁₁=Et, M=Ni, Y=O, X=Br;
the complex represented by the formula III‴, wherein R¹=R³=Br, R²=R⁴=R^{s}=R₅=R₆=R₉=R₁₀=H, R₇=R₈=Me, R₁₁=Et, M=Ni, Y=O, X=Br;
the complex represented by the formula III‴, wherein R¹=R³=Cl, R²=R⁴=R⁵=R₅=R₆=R₉=R₁₀=H, R₇=R₈=Me, R₁₁=Et, M=Ni, Y=O, X=Br; and
the complex represented by the formula III‴, wherein R¹=R³=F, R²=R⁴=R⁵=R₅=R₆=R₉=R₁₀=H, R₇=R₈=Me, R₁₁=Et, M=Ni, Y=O, X=Br.

9. The method as claimed in claim 1, **characterized in that** the main catalyst comprises at least one diimine-metal complex represented by a formula IV: 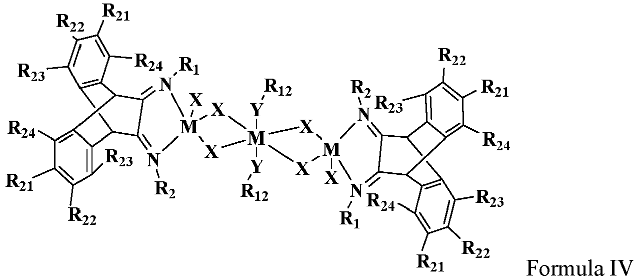 wherein, R₁ and R₂ are each independently a C1-C30 hydrocarbyl with or without a substituent; R₂₁-R₂₄ are each independently selected from the group consisting of hydrogen, halogen, hydroxy, C1-C20 hydrocarbyl with or without a substituent and C1-C20 hydrocarbyloxy with or without a substituent, and two or more of R₂₁-R₂₄ groups are optionally joined to form a ring; each R₁₂ is independently a C1-C20 hydrocarbyl with or without a substituent; each Y is independently a Group VIA non-metal atom; each M is independently a Group VIII metal; and each X is independently selected from the group consisting of halogen, C1-C10 hydrocarbyl with or without a substituent and C1-C10 hydrocarbyloxy with or without a substituent.

10. The method as claimed in claim 9, having at least one of the following features:
- R₁ and R₂ are independently selected from the group consisting of C1-C20 alkyl with or without a substituent and C6-C20 aryl with or without a substituent, and preferably R₁ and/or R₂ are/is a group represented by formula A: 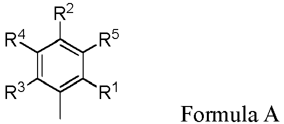 wherein, R¹-R⁵ are each independently selected from the group consisting of hydrogen, halogen, hydroxy, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, and C7-C20 alkaryl with or without a substituent, and two or more of R¹-R⁵ groups are optionally joined to form a ring;
preferably, wherein R¹-R⁵ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
- each M is independently selected from the group consisting of nickel and palladium;
- each Y is independently selected from the group consisting of O and S;
- each X is independently selected from the group consisting of halogen, C1-C10 alkyl with or without a substituent and C1-C10 alkoxy with or without a substituent, and preferably from the group consisting of halogen, C1-C6 alkyl with or without a substituent and C1-C6 alkoxy with or without a substituent; and
- each R₁₂ is independently a C1-C20 alkyl with or without a substituent, preferably a C1-C10 alkyl with or without a substituent, and more preferably a C1-C6 alkyl with or without a substituent.

11. The method as claimed in claim 9, **characterized in that** the main catalyst comprises at least one diimine-metal complex represented by a formula V: 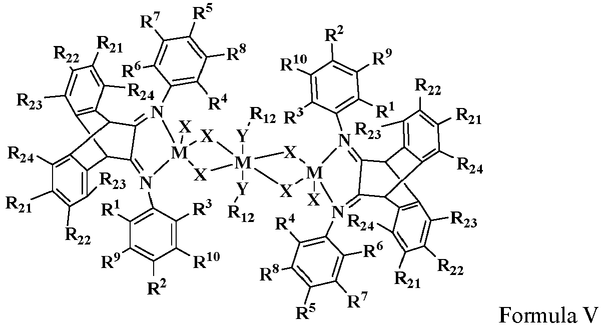 wherein, R¹-R¹⁰, R₂₁-R₂₄ are each independently selected from the group consisting of hydrogen, C1-C20 alkyl with or without a substituent, C2-C20 alkenyl with or without a substituent, C2-C20 alkynyl with or without a substituent, C3-C20 cycloalkyl with or without a substituent, C1-C20 alkoxy with or without a substituent, C2-C20 alkenoxy with or without a substituent, C2-C20 alkynoxy with or without a substituent, C3-C20 cycloalkoxy with or without a substituent, C6-C20 aryl with or without a substituent, C7-C20 aralkyl with or without a substituent, C7-C20 alkaryl with or without a substituent and halogen, two or more of R¹-R¹⁰ are optionally joined to form a ring, and two or more of R₂₁-R₂₄ are optionally joined to form a ring; and R₁₂, Y, M and X are as defined for the Formula I.

12. The method as claimed in claim 11, **characterized in that** R¹-R¹⁰, R₂₁-R₂₄ are each independently selected from the group consisting of hydrogen, halogen, hydroxy, C1-C10 alkyl with or without a substituent, C2-C10 alkenyl with or without a substituent, C2-C10 alkynyl with or without a substituent, C3-C10 cycloalkyl with or without a substituent, C1-C10 alkoxy with or without a substituent, C2-C10 alkenoxy with or without a substituent, C2-C10 alkynoxy with or without a substituent, C3-C10 cycloalkoxy with or without a substituent, C6-C15 aryl with or without a substituent, C7-C15 aralkyl with or without a substituent, and C7-C15 alkaryl with or without a substituent;
preferably, R¹-R¹⁰, R₂₁-R₂₄ are each independently selected from the group consisting of hydrogen, C1-C10 alkyl, halogenated C1-C10 alkyl, C1-C10 alkoxy, halogenated C1-C10 alkoxy, and halogen, and more preferably from the group consisting of hydrogen, C1-C6 alkyl, halogenated C1-C6 alkyl, C1-C6 alkoxy, halogenated C1-C6 alkoxy, and halogen.

13. The method as claimed in claim 9, **characterized in that** the substituent is selected from the group consisting of halogen, hydroxy, C1-C10 alkyl, halogenated C1-C10 alkyl, C1-C10 alkoxy and halogenated C1-C10 alkoxy, and preferably from the group consisting of halogen, hydroxy, C1-C6 alkyl, halogenated C1-C6 alkyl, C1-C6 alkoxy and halogenated C1-C6 alkoxy;
preferably, the C1-C6 alkyl is selected from the group consisting of methyl, ethyl, n-propyl, isopropyl, n-butyl, isobutyl, n-pentyl, isopentyl, n-hexyl, isohexyl and 3,3-dimethylbutyl;
preferably, the C1-C6 alkoxy is selected from the group consisting of methoxy, ethoxy, n-propoxy, isopropoxy, n-butoxy, isobutoxy, n-pentoxy, isopentoxy, n-hexoxy, isohexoxy and 3,3-dimethylbutoxy;
preferably, the halogen is selected from the group consisting of fluorine, chlorine, bromine and iodine.

14. The method as claimed in claim 11, **characterized in that** the main catalyst comprises at least one complex selected from the group consisting of:
1) the complex represented by the formula V, wherein R¹=R³=R⁴=R⁶=isopropyl, R²=R⁵=R⁷-R¹⁰=R₂₁=R₂₂=R₂₃=R₂₄=H, R₁₂=Et, M=Ni, Y=O, X=Br;
2) the complex represented by the formula V, wherein R¹=R³=R⁴=R⁶=Et, R²=R⁵=R⁷-R¹⁰=R₂₁=R₂₂=R₂₃=R₂₄=H, R₁₂=Et, M=Ni, Y=O, X=Br;
3) the complex represented by the formula V, wherein R¹=R³=R⁴=R⁶=Me, R²=R⁵=R⁷-R¹⁰=R₂₁=R₂₂=R₂₃=R₂₄=H, R₁₂=Et, M=Ni, Y=O, X=Br;
4) the complex represented by the formula V, wherein R¹-R⁶=Me, R⁷-R¹⁰=R₂₁ =R₂₂=R₂₃=R₂₄=H, R₁₂=Et, M=Ni, Y=O, X=Br;
5) the complex represented by the formula V, wherein R¹=R³=R⁴=R⁶=Br, R²=R⁵=R⁷-R¹⁰=R₂₁=R₂₂=R₂₃=R₂₄=H, R₁₂=Et, M=Ni, Y=O, X=Br;
6) the complex represented by the formula V, wherein R¹=R³=R⁴=R⁶=Cl, R²=R⁵=R⁷-R¹⁰=R₂₁=R₂₂=R₂₃=R₂₄=H, R₁₂=Et, M=Ni, Y=O, X=Br;
7) the complex represented by the formula V, wherein R¹=R³=R⁴=R⁶=F, R²=R⁵=R⁷-R¹⁰=R₂₁=R₂₂=R₂₃=R₂₄=H, R₁₂=Et, M=Ni, Y=O, X=Br;
8) the complex represented by the formula V, wherein R¹=R³=R⁴=R⁶=isopropyl, R²=R⁵=R⁷-R¹⁰=R₂₁=R₂₂=R₂₃=R₂₄=H, R₁₂=isobutyl, M=Ni, Y=O, X=Br;
9) the complex represented by the formula V, wherein R¹=R³=R⁴=R⁶=Et, R²=R⁵=R⁷-R¹⁰=R₂₁=R₂₂=R₂₃=R₂₄=H, R₁₂=isobutyl, M=Ni, Y=O, X=Br;
10) the complex represented by the formula V, wherein R¹=R³=R⁴=R⁶=Me, R²=R⁵=R⁷-R¹⁰=R₂₁=R₂₂=R₂₃=R₂₄=H, R₁₂=isobutyl, M=Ni, Y=O, X=Br;
11) the complex represented by the formula V, wherein R¹-R⁶=Me, R⁷-R¹⁰=R₂₁=R₂₂=R₂₃=R₂₄=H, R₁₂=isobutyl, M=Ni, Y=O, X=Br;
12) the complex represented by the formula V, wherein R¹=R³=R⁴=R⁶=Br, R²=R⁵=R⁷-R¹⁰=R₂₁=R₂₂=R₂₃=R₂₄=H, R₁₂=isobutyl, M=Ni, Y=O, X=Br;
13) the complex represented by the formula V, wherein R¹=R³=R⁴=R⁶=Cl, R²=R⁵=R⁷-R¹⁰=R₂₁=R₂₂=R₂₃=R₂₄=H, R₁₂=isobutyl, M=Ni, Y=O, X=Br;
14) the complex represented by the formula V, wherein R¹=R³=R⁴=R⁶=F, R²=R⁵=R⁷-R¹⁰=R₂₁=R₂₂=R₂₃=R₂₄=H, R₁₂=isobutyl, M=Ni, Y=O, X=Br;
15) the complex represented by the formula V, wherein R¹=R³=R⁴=R⁶=isopropyl, R²=R⁵=R⁷-R¹⁰=R₂₂=H, R₂₁=tert-butyl, R₂₃=R₂₄=H, R₁₂=Et, M=Ni, Y=O, X=Br;
16) the complex represented by the formula V, wherein R¹=R³=R⁴=R⁶=Et, R²=R⁵=R⁷-R¹⁰=R₂₂=H, R₂₁=tert-butyl, R₂₃=R₂₄=H, R₁₂=Et, M=Ni, Y=O, X=Br;
17) the complex represented by the formula V, wherein R¹=R³=R⁴=R⁶=Me, R²=R⁵=R⁷-R¹⁰=R₂₂= R₂₃=R₂₄=H, R₂₁=tert-butyl, R₁₂=Et, M=Ni, Y=O, X=Br;
18) the complex represented by the formula V, wherein R¹-R⁶=Me, R⁷-R¹⁰=R₂₂=R₂₃=R₂₄=H, R₂₁=tert-butyl, R₁₂=Et, M=Ni, Y=O, X=Br;
19) the complex represented by the formula V, wherein R¹=R³=R⁴=R⁶=Br, R²=R⁵=R⁷-R¹⁰=R₂₂= R₂₃=R₂₄=H, R₂₁=tert-butyl, R₁₂=Et, M=Ni, Y=O, X=Br;
20) the complex represented by the formula V, wherein R¹=R³=R⁴=R⁶=Cl, R²=R⁵=R⁷-R¹⁰=R₂₂= R₂₃=R₂₄=H, R₂₁=tert-butyl, R₁₂=Et, M=Ni, Y=O, X=Br;
21) the complex represented by the formula V, wherein R¹=R³=R⁴=R⁶=F, R²=R⁵=R⁷-R¹⁰=R₂₂= R₂₃=R₂₄=H, R₂₁=tert-butyl, R₁₂=Et, M=Ni, Y=O, X=Br;
22) the complex represented by the formula V, wherein R¹=R³=R⁴=R⁶=isopropyl, R²=R⁵=R⁷-R¹⁰=R₂₂= R₂₃=R₂₄=H, R₂₁=tert-butyl, R₁₂=isobutyl, M=Ni, Y=O, X=Br;
23) the complex represented by the formula V, wherein R¹=R³=R⁴=R⁶=Et, R²=R⁵=R⁷-R¹⁰=R₂₂= R₂₃=R₂₄=H, R₂₁=tert-butyl, R₁₂=isobutyl, M=Ni, Y=O, X=Br;
24) the complex represented by the formula V, wherein R¹=R³=R⁴=R⁶=Me, R²=R⁵=R⁷-R¹⁰=R₂₂= R₂₃=R₂₄=H, R₂₁=tert-butyl, R₁₂=isobutyl, M=Ni, Y=O, X=Br;
25) the complex represented by the formula V, wherein R¹-R⁶=Me, R⁷-R¹⁰=R₂₂=R₂₃=R₂₄=H, R₂₁=tert-butyl, R₁₂=isobutyl, M=Ni, Y=O, X=Br;
26) the complex represented by the formula V, wherein R¹=R³=R⁴=R⁶=Br, R²=R⁵=R⁷-R¹⁰=R₂₂= R₂₃=R₂₄=H, R₂₁=tert-butyl, R₁₂=isobutyl, M=Ni, Y=O, X=Br;
27) the complex represented by the formula V, wherein R¹=R³=R⁴=R⁶=Cl, R²=R⁵=R⁷-R¹⁰=R₂₂= R₂₃=R₂₄=H, R₂₁=tert-butyl, R₁₂=isobutyl, M=Ni, Y=O, X=Br;
28) the complex represented by the formula V, wherein R¹=R³=R⁴=R⁶=F, R²=R⁵=R⁷-R¹⁰=R₂₂= R₂₃=R₂₄=H, R₂₁=tert-butyl, R₁₂=isobutyl, M=Ni, Y=O, X=Br; 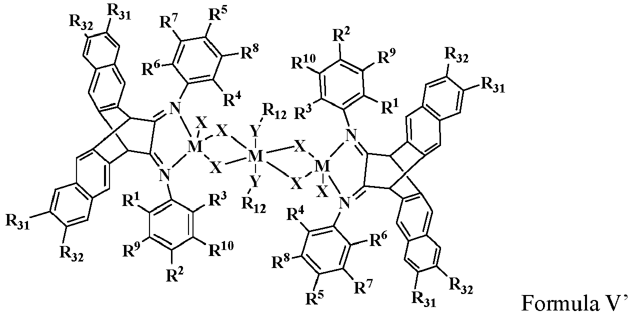
29) the complex represented by the formula V', wherein R¹=R³=R⁴=R⁶=isopropyl, R²=R⁵=R⁷-R¹⁰=R₃₁=R₃₂=H, R₁₂=Et, M=Ni, Y=O, X=Br;
30) the complex represented by the formula V', wherein R¹=R³=R⁴=R⁶=Et, R²=R⁵=R⁷-R¹⁰=R₃₁=R₃₂=H, R₁₂=Et, M=Ni, Y=O, X=Br;
31) the complex represented by the formula V', wherein R¹=R³=R⁴=R⁶=Me, R²=R⁵=R⁷-R¹⁰=R₃₁=R₃₂=H, R₁₂=Et, M=Ni, Y=O, X=Br;
32) the complex represented by the formula V', wherein R¹-R⁶=Me, R⁷-R¹⁰=R₃₁=R₃₂=H, R₁₂=Et, M=Ni, Y=O, X=Br;
33) the complex represented by the formula V', wherein R¹=R³=R⁴=R⁶=Br, R²=R⁵=R⁷-R¹⁰=R₃₁=R₃₂=H, R₁₂=Et, M=Ni, Y=O, X=Br;
34) the complex represented by the formula V', wherein R¹=R³=R⁴=R⁶=Cl, R²=R⁵=R⁷-R¹⁰=R₃₁=R₃₂=H, R₁₂=Et, M=Ni, Y=O, X=Br;
35) the complex represented by the formula V', wherein R¹=R³=R⁴=R⁶=F, R²=R⁵=R⁷-R¹⁰=R₃₁=R₃₂=H, R₁₂=Et, M=Ni, Y=O, X=Br;
36) the complex represented by the formula V', wherein R¹=R³=R⁴=R⁶=isopropyl, R²=R⁵=R⁷-R¹⁰=R₃₁=R₃₂=H, R₁₂=isobutyl, M=Ni, Y=O, X=Br;
37) the complex represented by the formula V', wherein R¹=R³=R⁴=R⁶=Et, R²=R⁵=R⁷-R¹⁰=R₃₁=R₃₂=H, R₁₂=isobutyl, M=Ni, Y=O, X=Br;
38) the complex represented by the formula V', wherein R¹=R³=R⁴=R⁶=Me, R²=R⁵=R⁷-R¹⁰=R₃₁=R₃₂=H, R₁₂=isobutyl, M=Ni, Y=O, X=Br;
39) the complex represented by the formula V', wherein R¹-R⁶=Me, R⁷-R¹⁰=R₃₁=R₃₂=H, R₁₂=isobutyl, M=Ni, Y=O, X=Br;
40) the complex represented by the formula V', wherein R¹=R³=R⁴=R⁶=Br, R²=R⁵=R⁷-R¹⁰=R₃₁=R₃₂=H, R₁₂=isobutyl, M=Ni, Y=O, X=Br;
41) the complex represented by the formula V', wherein R¹=R³=R⁴=R⁶=Cl, R²=R⁵=R⁷-R¹⁰=R₃₁=R₃₂=H, R₁₂=isobutyl, M=Ni, Y=O, X=Br;
42) the complex represented by the formula V', wherein R¹=R³=R⁴=R⁶=F, R²=R⁵=R⁷-R¹⁰=R₃₁=R₃₂=H, R₁₂=isobutyl, M=Ni, Y=O, X=Br;
43) the complex represented by the formula V', wherein R¹=R³=R⁴=R⁶=isopropyl, R²=R⁵=R⁷-R¹⁰=H, R₃₁=R₃₂=R₁₂=Et, M=Ni, Y=O, X=Br;
44) the complex represented by the formula V', wherein R¹=R³=R⁴=R⁶=Et, R²=R⁵=R⁷-R¹⁰=H, R₃₁=R₃₂=R₁₂=Et, M=Ni, Y=O, X=Br;
45) the complex represented by the formula V', wherein R¹=R³=R⁴=R⁶=Me, R²=R⁵=R⁷-R¹⁰=H, R₃₁=R₃₂=R₁₂=Et, M=Ni, Y=O, X=Br;
46) the complex represented by the formula V', wherein R¹-R⁶=Me, R⁷-R¹⁰=H, R₃₁=R₃₂=R₁₂=Et, M=Ni, Y=O, X=Br;
47) the complex represented by the formula V', wherein R¹=R³=R⁴=R⁶=Br, R²=R⁵=R⁷-R¹⁰=H, R₃₁=R₃₂=R₁₂=Et, M=Ni, Y=O, X=Br;
48) the complex represented by the formula V', wherein R¹=R³=R⁴=R⁶=Cl, R²=R⁵=R⁷-R¹⁰=H, R₃₁=R₃₂=R₁₂=Et, M=Ni, Y=O, X=Br;
49) the complex represented by the formula V', wherein R¹=R³=R⁴=R⁶=F, R²=R⁵=R⁷-R¹⁰=H, R₃₁=R₃₂=R₁₂=Et, M=Ni, Y=O, X=Br;
50) the complex represented by the formula V', wherein R¹=R³=R⁴=R⁶=isopropyl, R²=R⁵=R⁷-R¹⁰=H, R₃₁=R₃₂=R₁₂=Et, M=Ni, Y=O, X=Br;
51) the complex represented by the formula V', wherein R¹=R³=R⁴=R⁶=Et, R²=R⁵=R⁷-R¹⁰=H, R₃₁=R₃₂=Et, R₁₂=isobutyl, M=Ni, Y=O, X=Br;
52) the complex represented by the formula V', wherein R¹=R³=R⁴=R⁶=Me, R²=R⁵=R⁷-R¹⁰=H, R₃₁=R₃₂=Et, R₁₂=isobutyl, M=Ni, Y=O, X=Br;
53) the complex represented by the formula V', wherein R¹-R⁶=Me, R⁷-R¹⁰=H, R₃₁=R₃₂=Et, R₁₂=isobutyl, M=Ni, Y=O, X=Br;
54) the complex represented by the formula V', wherein R¹=R³=R⁴=R⁶=Br, R²=R⁵=R⁷-R¹⁰=H, R₃₁=R₃₂=Et, R₁₂=isobutyl, M=Ni, Y=O, X=Br;
55) the complex represented by the formula V', wherein R¹=R³=R⁴=R⁶=Cl, R²=R⁵=R⁷-R¹⁰=H, R₃₁=R₃₂=Et, R₁₂=isobutyl, M=Ni, Y=O, X=Br; and
56) the complex represented by the formula V', wherein R¹=R³=R⁴=R⁶=F, R²=R⁵=R⁷-R¹⁰=H, R₃₁=R₃₂=Et, R₁₂=isobutyl, M=Ni, Y=O, X=Br.

15. The method as claimed in any one of claims 1 to 14, **characterized in that**:
- the olefin is at least one of olefins having 2-20 carbon atoms, or at least one of olefins having 2-16 carbon atoms, preferably the olefin is at least one of ethylene and alpha-olefins having 3-14 carbon atoms, or at least one of ethylene, alpha-olefins having 3-16 carbon atoms and C₃-C₁₆ cyclic olefins, and more preferably the olefin is at least one of ethylene and/or C₂-C₁₀ alpha-olefin, and/or,
- the unsaturated carboxylic ester is one or more of those represented by formula G: 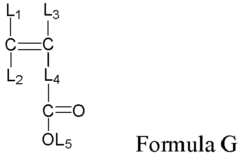 wherein, L₁-L₃ are each independently H or a C1-C30 alkyl with or without a substituent; L₄ is a C1-C30 alkylene group with a pendent group; and L₅ is H or a C1-C30 alkyl with or without a substituent, or L₅ is a C1-C20 alkyl or a C1-C20 alkyl haloalkyl,
preferably, L₁ and L₂ are H; L₃ is H or a C1-C20 alkyl, and more preferably H or a C1-C10 alkyl; L₄ is a C1-C20 alkylene with a pendent group, and more preferably a C1-C0 alkylene with a pendent group; and L₅ is a C1-C20 alkyl, preferably a C1-C10 alkyl, and more preferably a C1-C6 alkyl.

16. The method as claimed in claim 15, having at least one of the following features:
- the substituent in the L₁-L₃ is one or more selected from the group consisting of halogen, C1-C10 alkyl, C1-C10 alkoxy, C6-C10 aryl, cyano and hydroxy, and more preferably one or more selected from the group consisting of C1-C6 alkyl, halogen and C1-C6 alkoxy;
- the pendent group in the L₄ is one or more selected from the group consisting of halogen, C6-C20 aryl, C1-C20 alkyl and C1-C20 alkoxy, with the C6-C20 aryl, the C1-C20 alkyl and the C1-C20 alkoxy being optionally substituted by a substituent, which is preferably one or more selected from the group consisting of halogen, C1-C10 alkyl, C1-C10 alkoxy, C6-C10 aryl and hydroxy;
- the cocatalyst is selected from the group consisting of organoaluminum compounds and organoboron compounds;
preferably, the organoaluminum compounds is one or more selected from the group consisting of alkylaluminoxanes, alkylaluminums and alkyl aluminum halides;
preferably, the organoboron compound is selected from the group consisting of aromatic hydrocarbyl boron compounds and borates;
- a molar ratio of aluminum in the cocatalyst to M in the main catalyst is (10-10⁷):1, preferably (10-100,000): 1, and more preferably (100-20,000): 1; and/or
a molar ratio of boron in the cocatalyst to M in the main catalyst is (0.1-1,000): 1, preferably (0.1-500): 1, and a molar ratio of the organoaluminum to M in the main catalyst is (10-10⁵):1;
- reaction temperature ranges from -50°C to 100°C, preferably from -20°C to 60°C, and more preferably from 0°C to 50°C;
- reaction time ranges from 10 to 200 min, and preferably from 20 to 60 min; and
- the reaction is carried out under anhydrous and oxygen-free conditions.

17. The method as claimed in claim 15, having at least one of the following features:
- polymerization reaction is carried out in an alkane solvent, which is one or more of C3-C20 alkanes, preferably C3-C10 alkane;
- a concentration of the main catalyst in reaction system is from 0.00001 to 100 mmol/L, preferably from 0.0001 to 1 mmol/L, and more preferably from 0.001 to 0.5 mmol/L;
- a concentration of the unsaturated carboxylic ester monomer in reaction system is from 0.01 to 6,000 mmol/L, preferably from 0.1 to 1,000 mmol/L, and more preferably from 1 to 500 mmol/L.

18. A polymer obtained by the preparation method as claimed in any one of claims 1 to 17.

19. A copolymer of an olefin and an unsaturated carboxylic ester, **characterized in that**:
the polymer as-polymerized is spherical and/or sphere-like, with an average particle size ranging from 0.05 to 50.0 mm, preferably from 0.5 to 20.0 mm, and more preferably from 1 to 10 mm or from 0.5 to 5 mm; and
the polymer as-polymerized has a hollow structure, with a density of the polymer ranging from 0.2000 to 0.8500 g/cm³, and preferably from 0.3000 to 0.7500 g/cm³.

20. The copolymer of an olefin and an unsaturated carboxylic ester as claimed in claim 19, having at least one of the following features:
- the polymer has a weight average molecular weight of from 5,000 to 1,000,000, or from 5,000 to 800,000, or from 8,000-600,000, or from 10,000 to 600,000;
- the polymer has a molecular weight distribution of no more than 4.0, and preferably from 1.0 to 4.0; and
- in the polymer, a content of structural units derived from the unsaturated carboxylic ester represented by the formula G is from 0.1 to 30.0 mol%, and preferably from 0.1 to 10.0 mol%, or from 0.1 to 5.0 mol%.
